# EUROPEAN PATENT APPLICATION

(11) **EP 4 458 351 A2**
(43) Date of publication of application: **06.11.2024**
(21) Application number: 24188646.4
(22) Date of filing: 16.08.2019
(51) Int. Cl.: A61K 9/50

(54) **PARTICLE-CONTAINING DROPLET SYSTEMS WITH MONODISPERSE FLUID VOLUMES**

(30) Priority: 17.08.2018 US 201862719476 P
(62) Divisional of application: 19850668.5
(71) Applicant: The Regents of the University of California, Oakland, CA 94607-5200 (US)
(72) Inventor: DI CARLO, Dino, Los Angeles 90095-7191 (US); DE RUTTE, Joseph, Los Angeles 90095-7191 (US); DIMATTEO, Robert, Los Angeles 90095-7191 (US)
(74) Representative: Lecomte & Partners

(57) **Abstract**

Systems and methods are described herein that create discrete volumes associated with solid-phase particles (e.g., drop-carrier particles) suspended in an immiscible phase (e.g., dropicles). One embodiment of the system includes a plurality of hydrogel-based drop-carrier particles containing a microscale voids or cavities that hold an aqueous phase droplet of fluid within each drop-carrier particle. The plurality of hydrogel drop-carrier particles associated with aqueous drops are suspended as individual elements in an immiscible oil phase. The microscale hydrogel drop-carrier particles containing the voids or cavities may be manufactured using microfluidic droplet generators. The dropicles may be used to analyze single-entities (e.g., single-molecules and single-cells) and analytes.

## Description

### Related Application

This Application claims priority to U.S. Provisional Patent Application No. 62/719,476 filed on August 17, 2018, which is hereby incorporated by reference in its entirety. Priority is claimed pursuant to 35 U.S.C. § 119 and any other applicable statute.

### Statement Regarding Federally Sponsored Research and Development

This invention was made with government support under Grant Number GM126414, awarded by the National Institutes of Health. The government has certain rights in the invention.

### Technical Field

The technical field generally relates to small, sub-millimeter particles having a defined void or cavity formed therein that holds a fluid and is suspended in a separate immiscible fluid. More specifically, the technical field relates to dropicle structures that are formed from drop-carrier particles that hold fluid within the void or cavity formed therein. In one preferred embodiment, the drop-carrier particle is formed from a hydrophilic hydrogel material and holds an aqueous solution within the void or cavity.

### Background

Microfluidics is the gold standard approach to form monodisperse emulsions (suspensions of dispersed drops of immiscible fluid in another continuous phase of fluid). Although microfluidics technologies have become more accessible, devices and equipment are expensive and require expertise. In some applications creating droplets that contain particles is also advantageous (e.g., for performing solid-phase reactions or growing cells that adhere to surfaces). Creating droplets that contain a single particle per droplet is currently challenging because of the stochastic processes of particle encapsulation in droplets. An alternative approach to create aqueous drops with increased monodispersity compared to a randomly mixed emulsion was described by Novak et al., Single-Cell Multiplex Gene Detection and Sequencing with Microfluidically Generated Agarose Emulsions, Angewandte Chemie International Edition, 50(2), 390-395 (2011).

In Novak et al., droplets were formed using simple agitation (vortexing/pipetting) of an aqueous phase containing dispersed particles into an oil water suspension. Novak et al. utilized re-emulsification of cell-encapsulated agarose beads to create isolated compartments for PCR amplification. This work relied on microfluidic devices for the encapsulation of cells and primer-functionalized beads in the agarose-gel droplets. Downstream analysis after PCR was performed by cytometry on the released primer beads, but not the larger agarose bead.

The particles contained in the droplets can act as templates to define a minimum droplet size. However, since the fluid surrounds the particle only in a thin layer there are significant disadvantages of this approach. The droplets formed by this approach have large variations in the "thin" volume formed around hydrogel particles, provide no space for encapsulation of microscale objects (e.g., cells, beads), and are not ideal for reactions with large molecules that cannot freely diffuse in the particle matrix.

### Summary

In one embodiment, the use of microparticles which contain a void or cavity region connected to or in communication with the particle surface can act as significantly improved particle templates to generate a uniform distribution of droplets while also containing an open space to perform reactions or encapsulate cells, beads, and other small micro-objects. These cavity-containing particles also enhance the ability to encapsulate larger volumes of an aqueous fluid sample (per droplet and total sample volume for a plurality of particles) compared to non-cavity containing particles, which is important for cell culture, cell secretion analysis, and diagnostic analysis of large volumes of sample.

Microparticle shape and void design are important parameters to control to achieve uniform volume emulsions templated by these particles. Particle shapes that can assemble and nest/interlock with each other can lead to aggregated particles that decrease the uniformity of the drops formed upon mixing with a two-fluid-phase system. In a preferred embodiment microparticle shape is defined by a spherical envelope with an inscribed subtracted void volume within the spherical envelope. The subtracted void or cavity may take the shape of a sphere that interfaces, communicates with, or opens to the outer surface of the particle, creating a final particle with a crescent-shaped cross-section. The inscribed void intersects the spherical envelope at its surface in order to create a pathway for fluid filling. In one preferred aspect, the void intersects the spherical envelope at a narrow opening (i.e., a low fraction of the surface area of the spherical envelope). In some embodiments this fractional area defined by the opening is <33% of the overall spherical envelope of the particle, in others <10%, and in further embodiments the fractional area is <5%. Alternatively, in some embodiments the subtracted void does not intersect the spherical envelope's surface. In such an embodiment, cells or large molecules cannot be isolated by a drop templated by the particle, however, diffusion of water and small molecules is possible for a microparticle formed from a hydrogel or other porous material enabling filling of the void and molecular analyses or other downstream assays. In related embodiments, the void volume includes a polymer material with higher porosity/molecular diffusivity compared to the microparticle material. Note that in other embodiments the envelope shape of the particle may be ellipsoid or other shape that does not pack with large surface areas of contact. The void volume may also comprise one or more void regions subtracted from the particle volume.

Microparticle surface properties and materials should also be controlled to support the formation of drops. For example, microparticles with a hydrophilic surface (e.g., low interfacial tension with an aqueous phase compared to an oil phase) can be used to template aqueous-based droplets. Alternatively, a hydrophobic/fluorophilic particle (e.g., low interfacial tension with an oil/fluorinated oil phase compared to aqueous phase) may be used to template oil-based droplets in a separate immiscible continuous phase. The oil phase in the oil-based droplets may include fluorinated oils, mineral oils, silicone oils, plant-derived oils, animal-derived oils, crude oils, hydrocarbons or fuels, organic solvents, and the like. In one preferred embodiment, the microparticle is formed from a hydrophilic hydrogel material that templates the formation of an aqueous droplet of uniform volume based on an inscribed void volume that is contained in a fluorinated oil continuous phase.

In one exemplary embodiment, cavity or void-containing hydrogel particles are fabricated to create uniform cavities using an aqueous two-phase system combined with droplet microfluidics. In the exemplary embodiment, a PEG/dextran aqueous two-phase system is disclosed, although other aqueous two-phase systems could be used such as PEG/poly vinyl alcohol or PEG/high ionic strength salt systems, (or even three-immiscible phase systems). In one specific embodiment, PEG and dextran are co-flowed in a flow-focusing droplet generator to generate emulsions from the mixed materials that phase-separate to create two distinct regions in each drop. The outer PEG region is crosslinked (e.g., via UV excitation and presence of a photoinitiator and crosslinker) and the inner dextran layer is washed away to leave a large void space within the microparticle. By tuning the relative concentrations of both the PEG and dextran one can tune the morphology and/or volume of the void space or cavity within the microgel particle. Initial testing of the emulsification of the cavity-containing particles into oil show a uniform range of droplet sizes. Furthermore, the void space or cavity within the particles is shown to be freely accessible to large molecules such as high molecular weight FITC dextran solution (500 kDa) which enters the void or cavity.

In one embodiment, a droplet-based system that employs volumes associated with solid-phase particles suspended in an immiscible fluid includes a plurality of three-dimensional hydrophilic drop-carrier particles formed from a crosslinked hydrogel, wherein each hydrophilic drop-carrier particle has a void or cavity formed therein. An aqueous fluid is associated with the three-dimensional hydrophilic drop-carrier particles and is disposed in the void or cavity of the plurality of three-dimensional hydrophilic drop-carrier particles. The plurality of three-dimensional hydrophilic drop-carrier particles associated with the aqueous fluid are further disposed in an oil phase. In some embodiments, the aqueous fluid disposed in the void or cavity of the three-dimensional hydrophilic drop-carrier particles have substantially the same volumes (e.g., substantially monodisperse volumes). The system thus includes a plurality of solid particles having a defined void or cavity formed therein that holds a first fluid therein and is suspended in a second, separate immiscible fluid. In some embodiments, the first fluid may be an aqueous fluid while the second, separate immiscible fluid is an oil-based fluid. In other embodiments, the first fluid is an oil-based fluid while the second, separate immiscible fluid is an aqueous fluid.

In another embodiment, a droplet-based system that employs volumes associated with solid-phase particles suspended in an immiscible fluid includes a plurality of three-dimensional hydrophilic drop-carrier particles formed from a crosslinked hydrogel, each hydrophilic drop-carrier particle having a void or cavity formed therein. An aqueous fluid is associated with the three-dimensional hydrophilic drop-carrier particles and disposed in the void or cavity of the plurality of three-dimensional hydrophilic drop-carrier particles. The plurality of three-dimensional hydrophilic drop-carrier particles associated with the aqueous fluid are further disposed or suspended in an oil phase to form dropicle emulsions. Preferably, substantially all of the dropicle emulsions that are formed contain a single drop-carrier particle therein.

In another embodiment, a method of manufacturing hydrophilic drop-carrier particles includes providing a microfluidic droplet generator device having a plurality of inlets. A fluid solution containing a crosslinkable first component of an aqueous two-phase system containing a photoinitiator is flowed in one of the inlets, wherein the crosslinkable first component is poly(ethylene glycol) PEG, or a PEG-derivative. A solution of a second component of the aqueous two-phase system containing a crosslinker is flowed in another of the inlets. An oil phase is flowed into the device in another of the inlets, whereby droplets are formed in the microfluidic device, each droplet separating into separate regions within the respective droplet, the separate regions containing an enriched phase of the crosslinkable first component (e.g., PEG or PEG-derivative) and an enriched phase of the second component of the aqueous two-phase system (e.g., polymer such as dextran). The enriched phase of the crosslinkable first component is then crosslinked by exposure to light to form hydrophilic drop-carrier particles.

In another embodiment, a method of manufacturing hydrophilic drop-carrier particles includes providing a microfluidic droplet generator device having a plurality of inlets. A solution of a crosslinkable first component of an aqueous two-phase system containing a crosslinker is flowed into the droplet generator device in one of the inlets, wherein the crosslinkable first component is poly(ethylene glycol) PEG, or a PEG-derivative. A solution of a second component of the aqueous two-phase system is flowed into the droplet generator device in another of the inlets. An oil phase is flowed into the droplet generator device in another of the inlets, whereby droplets are formed in the microfluidic device, each droplet separating into separate regions within the respective droplet containing an enriched phase of the crosslinkable first component (e.g., PEG or PEG-derivative) and an enriched phase of the second component of the aqueous two-phase system. The enriched phase of the crosslinkable first component is then crosslinked by increasing the pH to form hydrophilic drop-carrier particles.

In another embodiment, a method of performing a cell secretion assay using drop-carrier particles includes the operations of: providing a plurality of three-dimensional hydrophilic drop-carrier particles, each particle having a void or cavity formed therein; loading cells into the voids or cavities of the plurality of three-dimensional hydrophilic drop-carrier particles; adding an affinity agent to the plurality of three-dimensional hydrophilic drop-carrier particles specific to a cell secretion of interest; emulsifying the plurality of three-dimensional hydrophilic drop-carrier particles containing the cells and affinity agent to form a plurality of dropicles; incubating the plurality of dropicles; breaking the emulsion of the dropicles to recover the three-dimensional hydrophilic drop-carrier particles containing the cells in an aqueous solution and adding a stain, dye, or other secondary affinity reagent specific to the secretion of interest on one or more of the plurality of three-dimensional hydrophilic drop-carrier particles; analyzing the plurality of three-dimensional hydrophilic drop-carrier particles of the prior operation for a signal formed or generated by the stain, dye, or other secondary affinity reagent specific to the cell secretion of interest on one or more of the plurality of three-dimensional hydrophilic drop-carrier particles. The plurality of three-dimensional hydrophilic drop-carrier particles may optionally be washed prior to adding the affinity agent.

### Brief Description of the Drawings

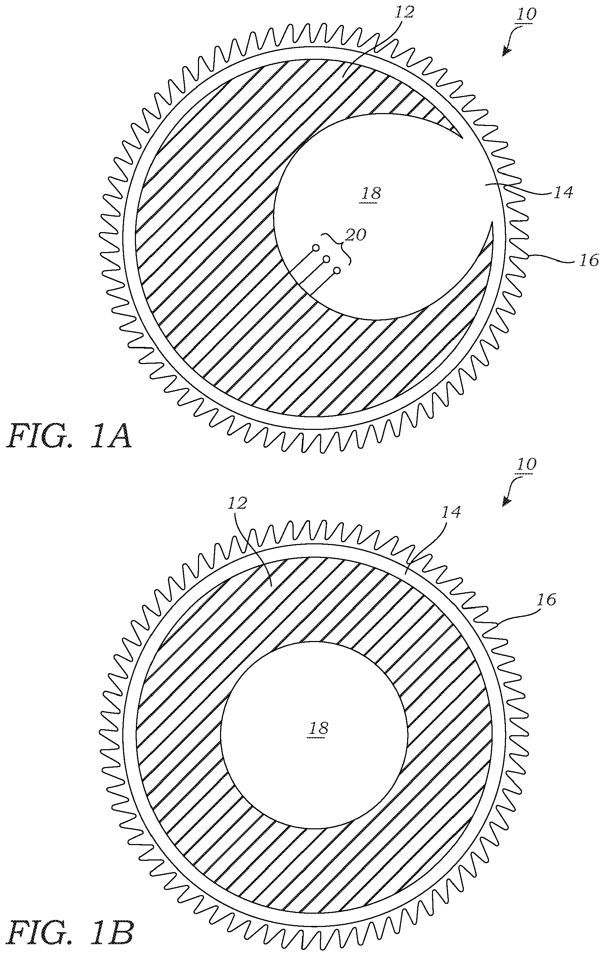

FIG. 1A illustrates one embodiment of a dropicle.
FIG. 1B illustrates another embodiment of a dropicle.

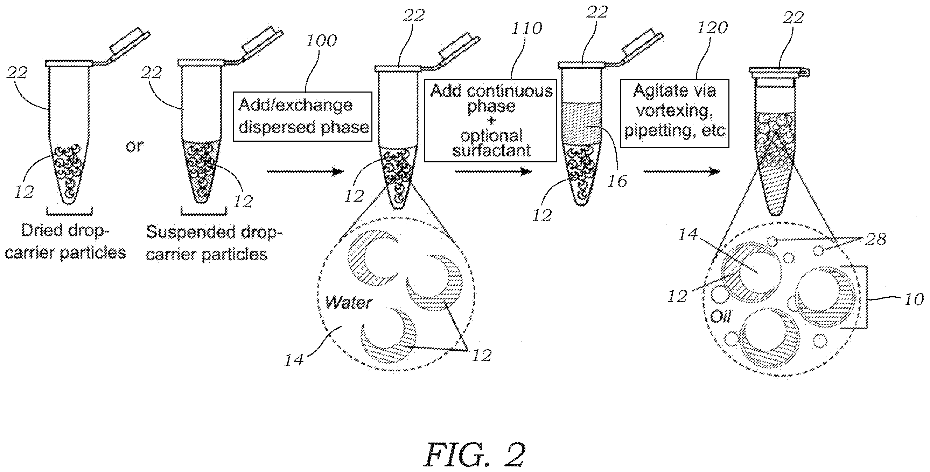

FIG. 2 illustrates a general schematic overview of dropicle formation. Dried or suspended drop-carrier particles are taken and dispersed phase with optional surfactant is added or exchanged. A continuous phase with optional surfactant is added, and the suspension is agitated (e.g., via vortexing, pipetting, etc.) to generate emulsions of decreasing size. After sufficient agitation dropicles of uniform size are formed along with satellite droplets.

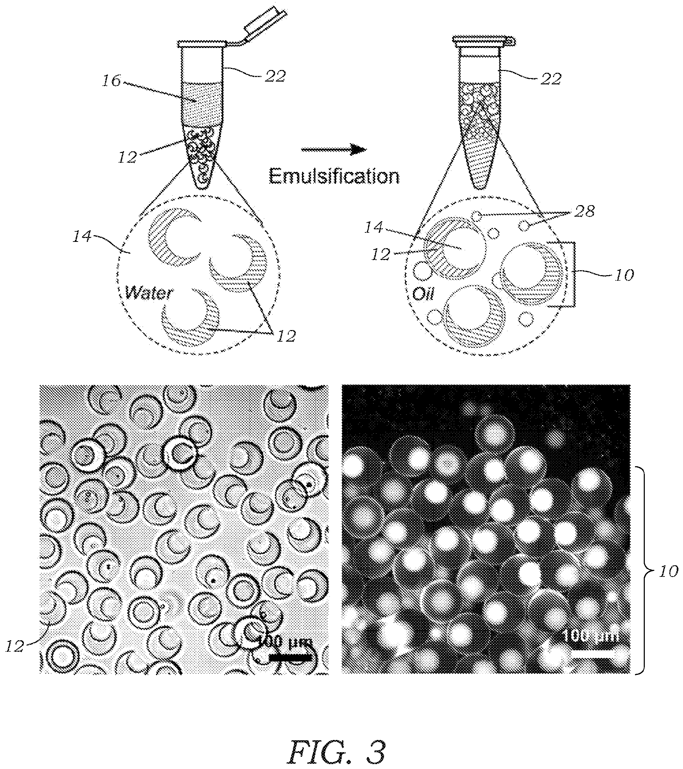

FIG. 3 illustrates the formation of "dropicles" with a 5 µM FITC dextran (500 kDa) solution as the dispersed phase, and Novec^{™} 7500 fluorinated oil with 0.5% Pico-Surf^{™} as the continuous phase. Fluorescent images show distinct signal within the cavity of the dropicles.

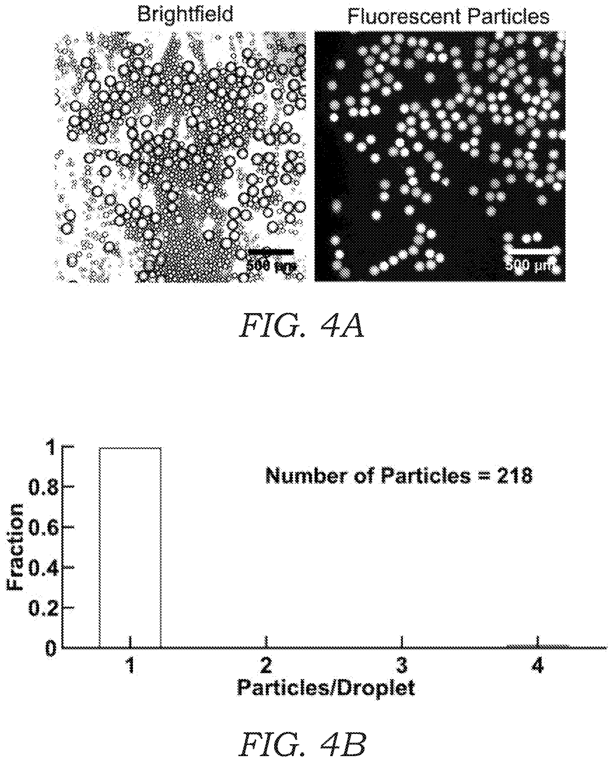

FIG. 4A illustrates images of the emulsions formed with a microgel particle suspension is emulsified into Novec^{™} 7500 oil + 0.5% Pico-Surf^{™} with spherical drop-carrier particles shown in the TRITC channel (right).
FIG. 4B illustrates a graph of number of droplets as a function of particles/droplet showing that nearly all droplets contain either 0 or 1 particles.

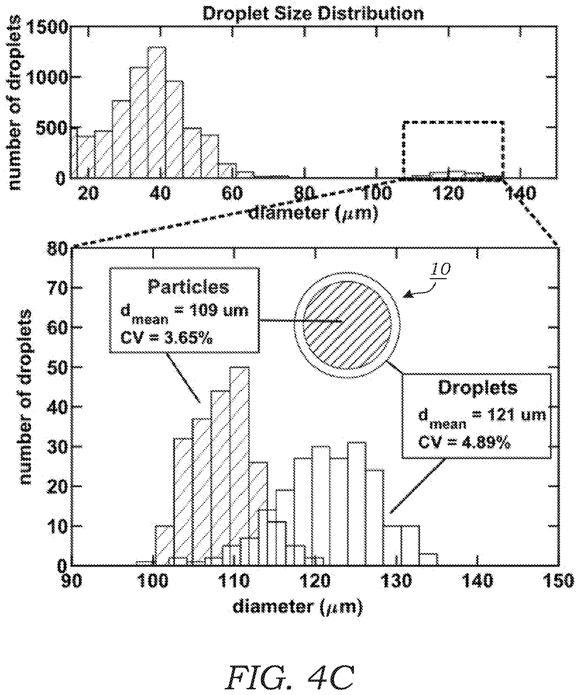

FIG. 4C illustrates a graph showing droplet size distribution showing a range of non-uniform satellite droplets along with a uniform region of droplets formed with encapsulated spherical particles.

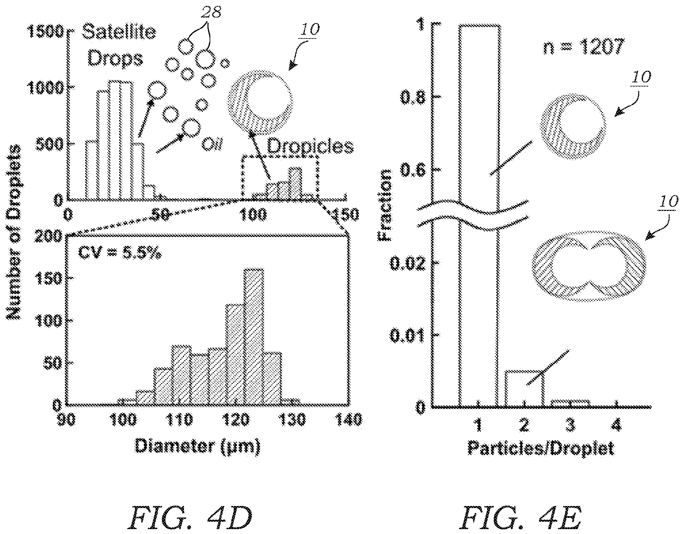

FIG. 4D illustrates a graph showing droplet size distribution showing a range of non-uniform satellite droplets along with a uniform region of dropicles formed with encapsulated crescent-shaped drop-carrier particles.
FIG. 4E illustrates a graph of the fraction of droplets as a function of the number of drop-carrier particles (crescent-shaped) per droplet (n=1207). Nearly all droplets contain a single drop-carrier particle.

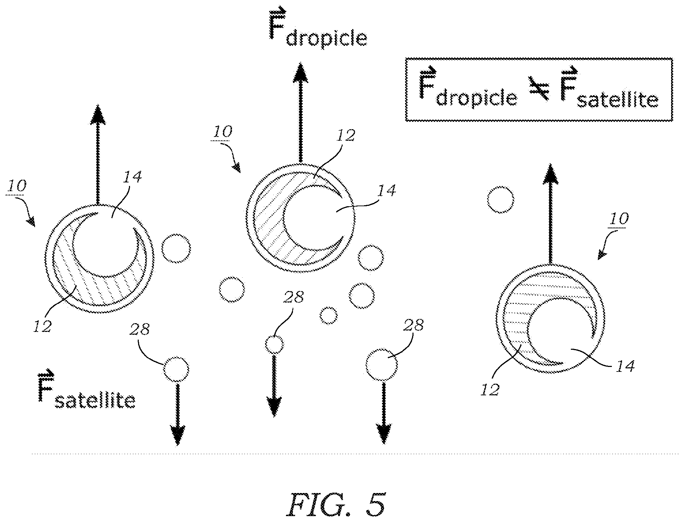

FIG. 5 schematically illustrates the separation of dropicles from satellite droplets. In some embodiments an external force, or combination of external forces is applied (e.g., magnetic, gravitational, buoyant, drag, centripetal, etc.) such that dropicles and satellite droplets experience a different force (magnitude and/or direction).

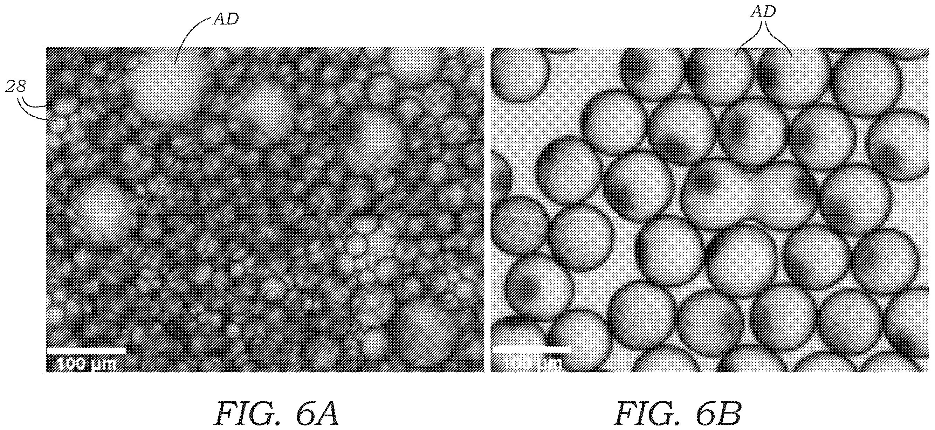

FIGS. 6A and 6B illustrate images of PEG-Vinyl Sulfone microgel particles that were gelled in the presence of thiolated magnetic particles (1 µm) and subsequently emulsified in fluorinated oil. FIG. 6A shows the initial emulsification resulted in aqueous droplets encapsulating magnetic microgel particles in a large background of empty satellite droplets. FIG. 6B is taken after application of a magnetic field that enables emulsified magnetic microgel particles to be separated from the background of empty droplets.

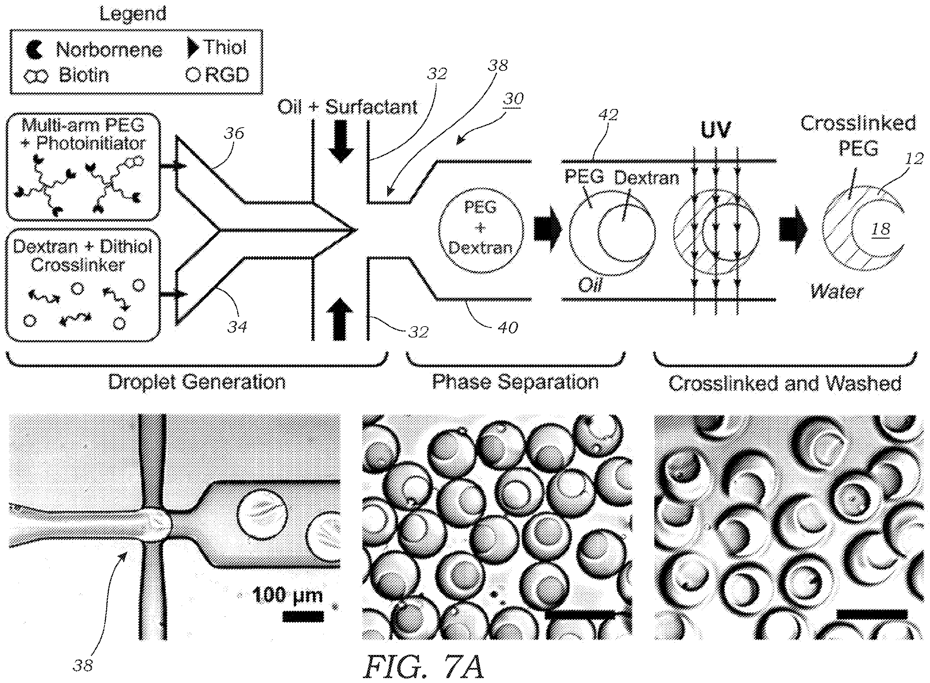

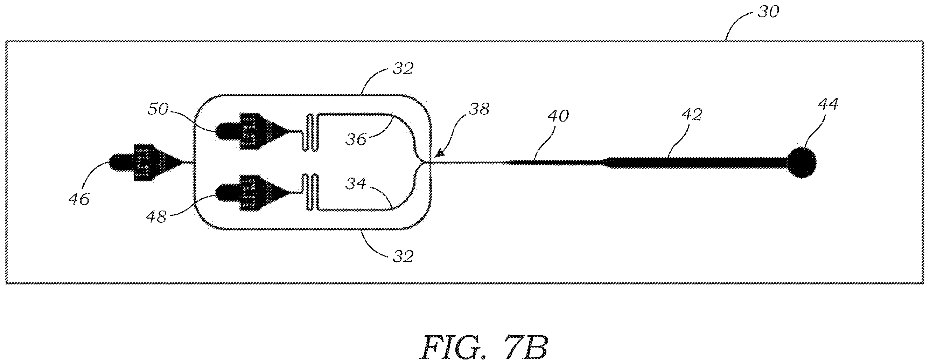

FIG. 7A illustrates one embodiment of the process used to fabricate the cavity-containing microparticles via an aqueous two-phase system. In this embodiment, PEG (e.g., 4-arm 10 kDa PEG-norbornene) and dextran (e.g., 40 kDa) phases are co-flowed in a microfluidic droplet generator device (FIG. 7B) to generate monodisperse emulsions in oil (e.g., Novec^{™} 7500 + 0.25% Pico-Surf^{™}). The PEG and dextran phase separate once drops are formed and the PEG phase is then crosslinked. In one embodiment UV excitation is used to crosslink the gels. More specifically, photoinitiator (2% w/v Lithium phenyl-2,4,6-trimethylbenzoylphosphinate (LAP)) is pre-dispersed in the PEG phase, and a crosslinker (DTT) is pre-dispersed in the dextran phase. After phase separation UV light is used to generate radicals which induce thiol-ene reaction between the PEG-norbornene and DTT crosslinkers to create a gel matrix. After crosslinking the particles are washed to remove the oil and dextran phases. Respective microscopic images of droplet generation, phase separation, and washing are illustrated below respective regions of the microfluidic droplet generation device.
FIG. 7B illustrates a microfluidic droplet generation device that is used to form the drop-carrier particles using the method of FIG. 7A.

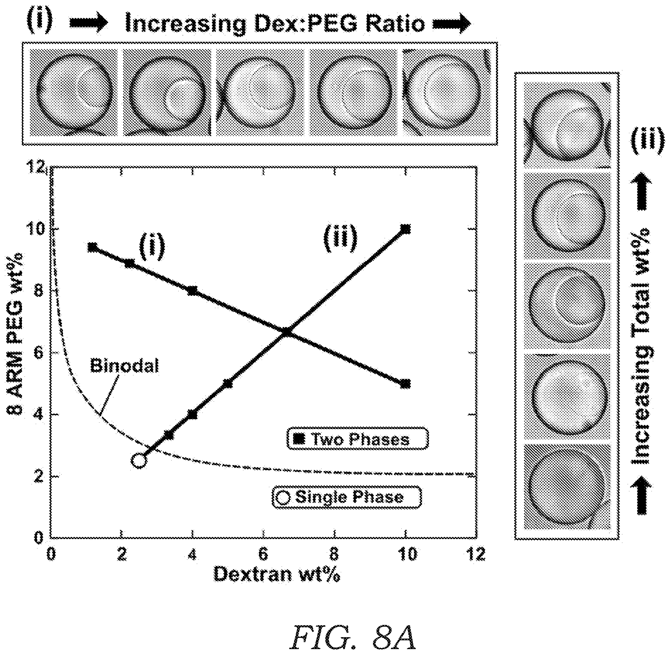

FIG. 8A illustrates a phase diagram of example PEG-dextran aqueous two-phase system. In this embodiment, 20 kDa 8-arm PEG vinyl sulfone and 40 kDa dextran solutions were used. Emulsions were formed using the flow focusing/droplet generating microfluidic device illustrated in FIG. 7B. The morphology of the PEG and dextran regions can be tuned by changing their relative concentrations. At dilute concentrations the dextran and PEG phases remain mixed. At less dilute concentrations the PEG and dextran undergo phase separation. As the dextran to PEG concentration ratio is increased in the final droplet, the volume fraction of the inner dextran region is increased. As total concentration of PEG and dextran is increased, interfacial tension between the two phases causes protrusion of the dextran region (upper right-hand images). Droplets shown are approximately 100 micrometers in diameter.

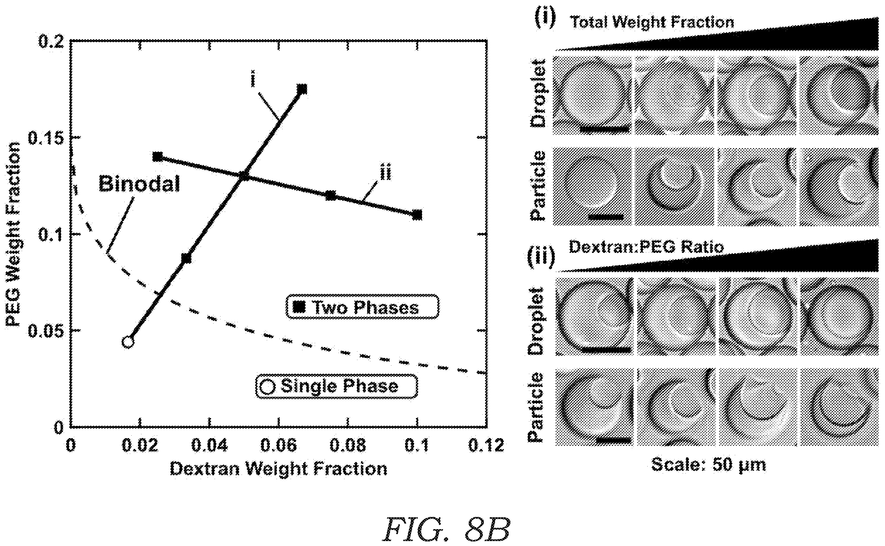

FIG. 8B illustrates a phase diagram of example PEG-dextran aqueous two-phase system. In this embodiment, 10 kDa 4-arm PEG-norbornene and 40 kDa dextran solutions were used. By adjusting the concentrations of PEG and Dextran both the morphology of the droplets and the resulting UV crosslinked particles can be tuned.

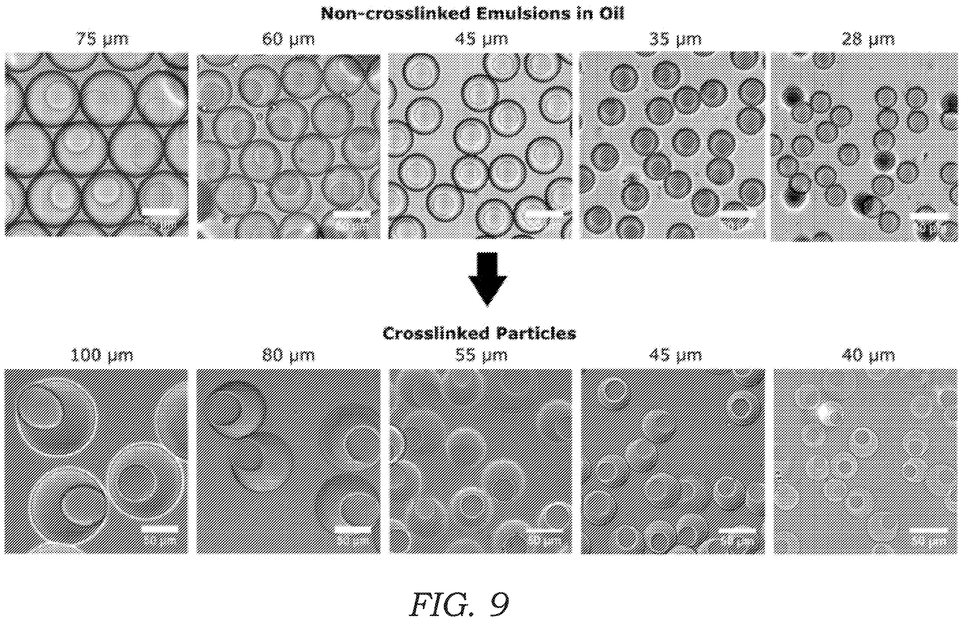

FIG. 9 illustrates a range of drop-carrier particles fabricated using the aqueous two-phase system approach. After crosslinking and washing steps, drop-carrier particles swell to approximately 130% their original diameter. For conditions shown here 20% w/v 40 kDa Dextran and 15% w/v 4-arm PEG-norbornene (10 kDa) were used. The 100 micrometer and 80 micrometer diameter drop-carrier particles 12 were fabricated using a microfluidic droplet generation device with a channel height of 70 micrometers, PEG flow rate of 4 microliter/min, dextran flow rate of 1 microliter/min, and oil flow rate of 10 and 20 microliter/min, respectively. The 55, 45, and 40 micrometer diameter drop-carrier particles 12 were fabricated using a microfluidic droplet generation device with a channel height of 18 micrometers, PEG flow rate of 2 microliter/min, dextran flow rate of 0.5 microliter/min, and oil flow rate of 5, 10, and 20 microliter/min, respectively.

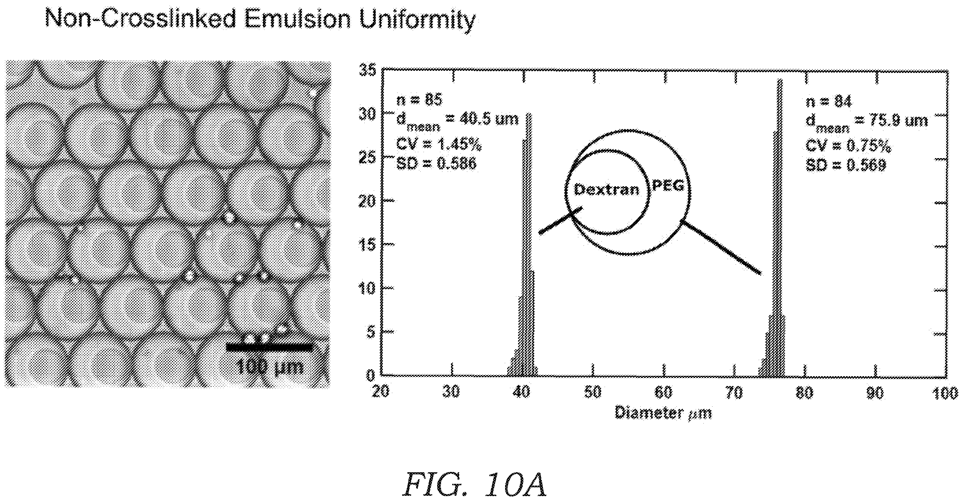

FIG. 10A illustrates PEG-dextran emulsions formed in fluorinated oil. Image analysis (right) shows high-uniformity of both the PEG (CV=0.75%) and dextran phase (CV=1.45%). CV is coefficient of variation.

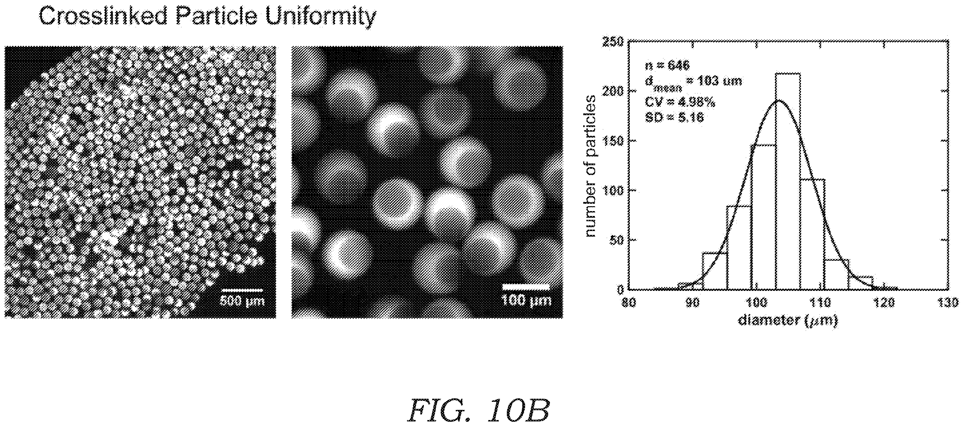

FIG. 10B illustrates crosslinked drop-carrier particles dispersed in water and imaged using fluorescence microscopy (left two images). Particles were conjugated with a TRITC-maleimide dye to view them in a fluorescent channel - a similar fluorophore conjugation step can be used for fluorescent barcoding. Distribution of particle size is uniform (CV<5%) as seen in graph of number of drop-carrier particles vs. diameter which is located on the right side of FIG. 10B.

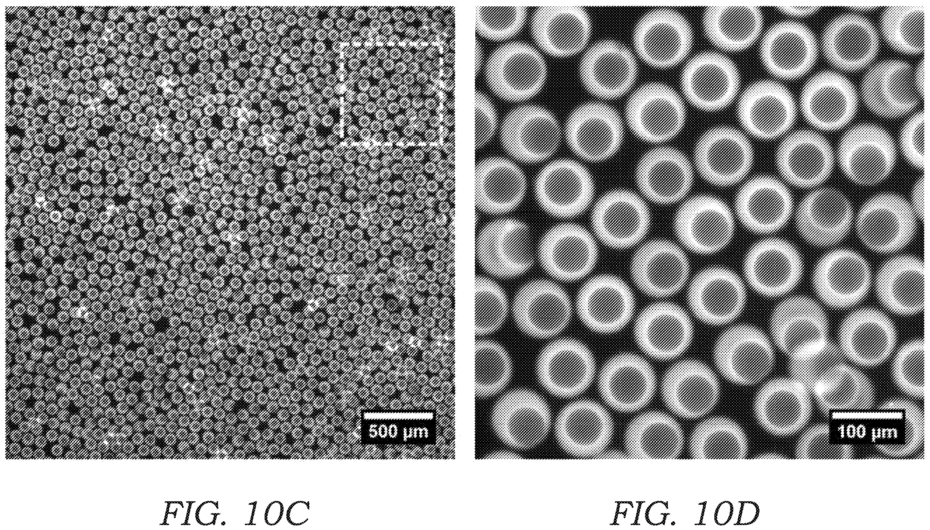

FIGS. 10C and 10D illustrates drop-carrier particles dispersed in water and imaged using fluorescence microscopy. FIG. 10D shows the enlarged region of FIG. 10C.

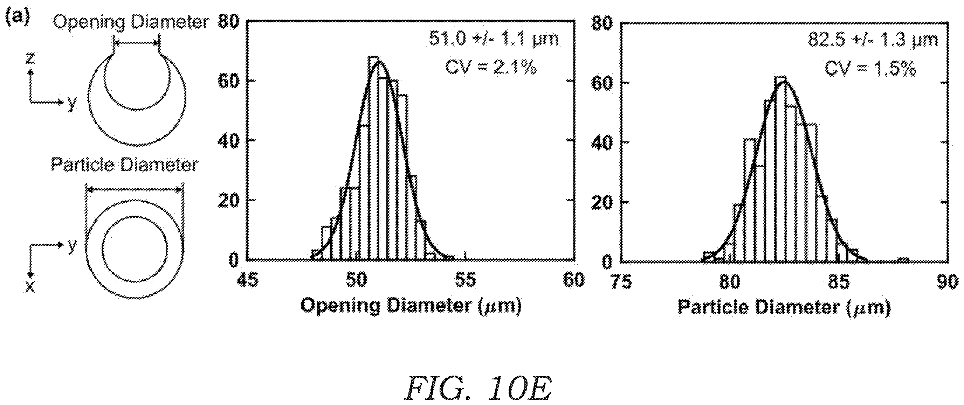

FIG. 10E illustrates histograms of opening diameter and particle diameter as function of particle count. High uniformity was achieved by UV crosslinking of phase separated droplets while they remained in the microfluidic chip (Outer diameter CV=1.5%, opening diameter CV=2.1%).

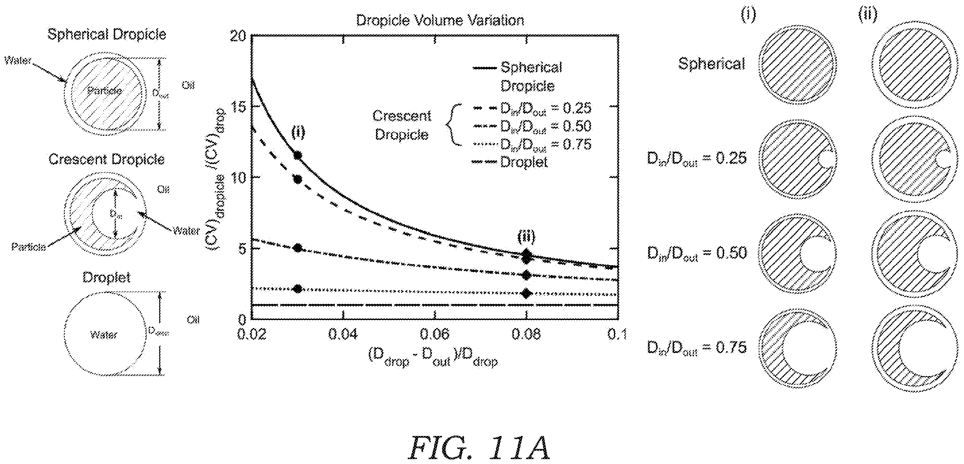

FIG. 11A illustrates theoretical calculations of dropicle volume variation. Here, a dropicle is considered that is templated by a spherical particle and a crescent or hollow drop-carrier particle (i.e., void or cavity-containing particle), and compared to a droplet formed by a microfluidic device (without any particle). The drop-carrier particle is constrained to a fixed size, and the outer droplet diameter is varied relative to the particle diameter. The graphs demonstrate that the variance of the dispersed phase volume compared to the total volume is decreased with increased diameter by using the particle with a cavity. More specifically, variation in dispersed phase volume decreases as the ratio of the internal cavity diameter to the outer particle diameter increases, which is advantageous to performing uniform reactions in the dropicles.

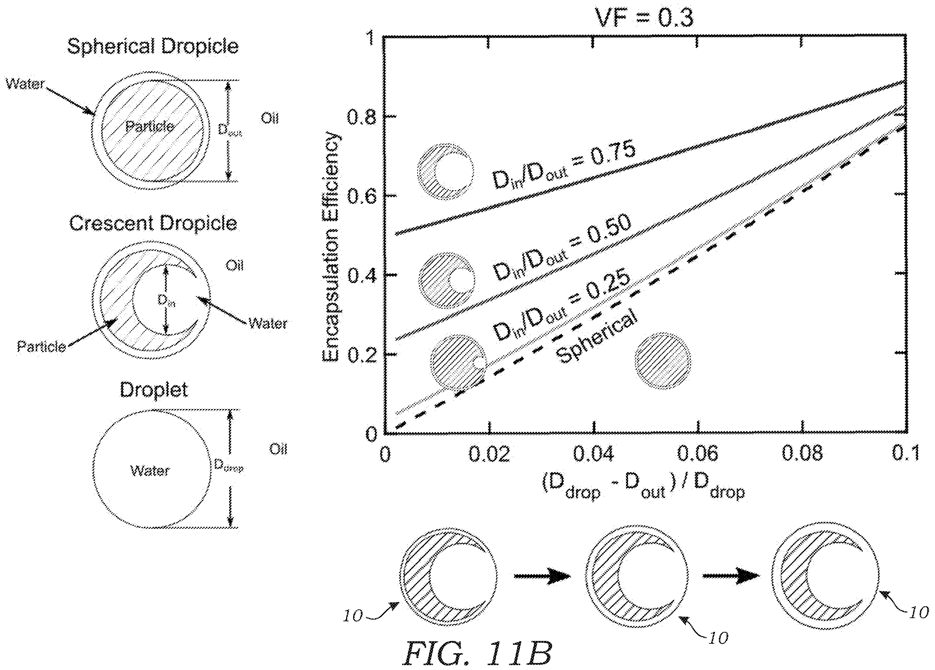

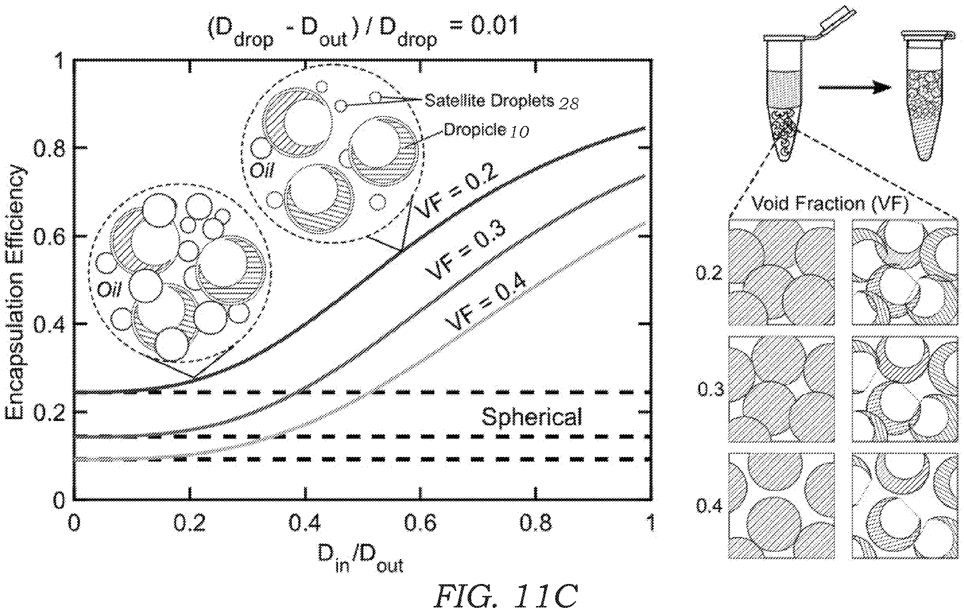

FIGS. 11B and 11C illustrates theoretical calculations of reagent encapsulation efficiency in dropicles. Here, a dropicle is considered that is templated by a spherical particle and a crescent or hollow drop-carrier particle (i.e., void or cavity-containing particle). FIG. 11B demonstrates increased encapsulation efficiency for particles with relatively larger cavities as well as for dropicles with thicker outer water layers. FIG. 11C demonstrates that increasing the concentration of drop-carrier particles before formation of dropicles (reducing void fraction) increases encapsulation efficiency.

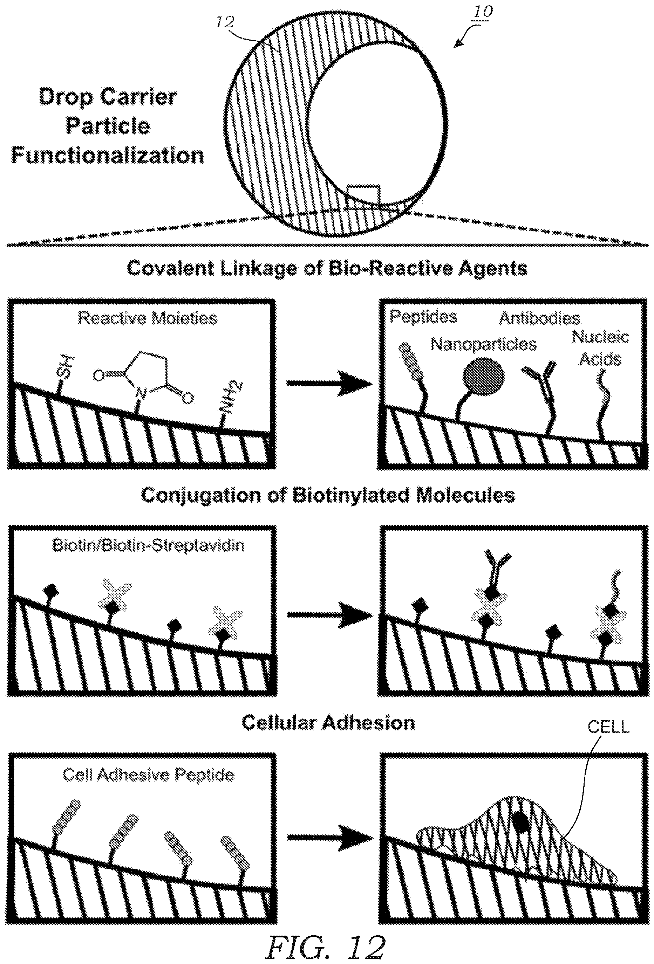

FIG. 12 schematically illustrates how drop-carrier particles can be decorated with many different reactive moieties to enable particle functionalization and dropicle compatibility with many standard assays. Three methods of particle conjugation include through orthogonal reactive chemistries, biotin-streptavidin coupling, or cell adhesive peptides.

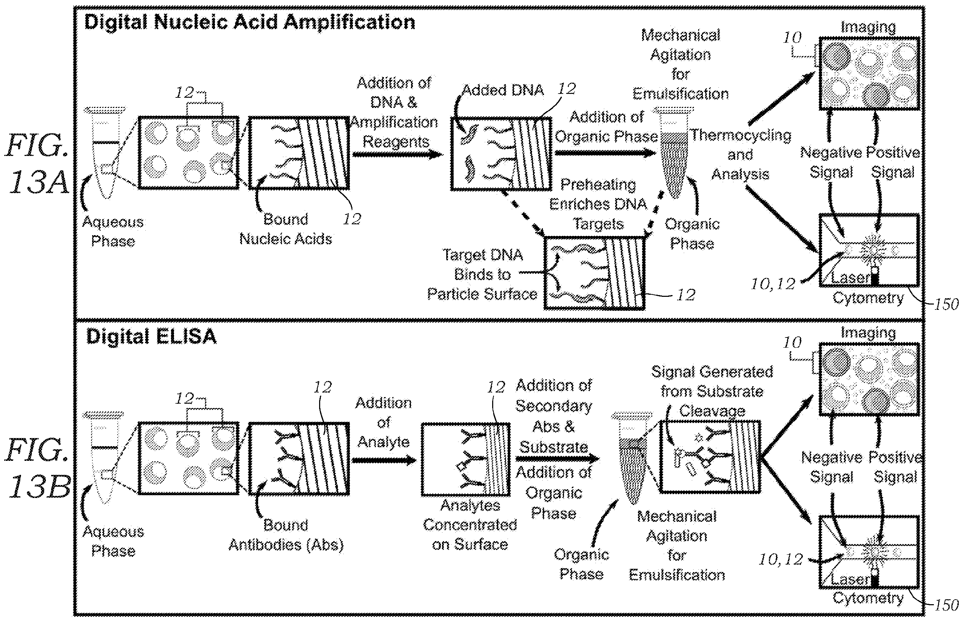

FIGS. 13A and 13B illustrates how digital nucleic acid amplification assays such as PCR (FIG. 13A) and digital ELISA (FIG. 13B) can be carried out in dropicles. Drop-carrier particles functionalized with nucleic acids or antibodies are mixed in aqueous solution with the appropriate assay reagents. Analytes of interest preferentially self-associate with the surface of drop-carrier particles allowing subsequent washing to remove background signals. Particles are then emulsified through mechanical agitation to form dropicles isolating reactions and accumulated signals within the droplet volume or attached to the drop-carrier particles themselves. Dropicles can then be analyzed through standard microscopy, flow cytometry, or via plate readers.

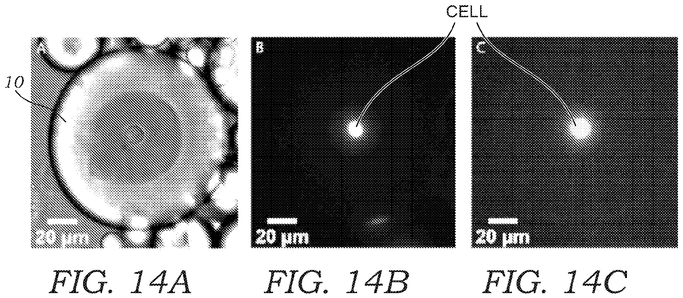

FIGS. 14A-14C illustrate dropicle emulsification does not affect cell viability. Jurkat cells stained with hoescht and calcein were suspended in aqueous solution along with drop-carrier particles. Drop-carrier particles were emulsified through mechanical agitation in fluorinated oil to form dropicles containing cells. Dropicles were imaged via fluorescence microscopy in brightfield (cell morphology) (FIG. 14A), DAPI (hoescht - nuclear stain) (FIG. 14B), and FITC (calcein - cell viability) channels (FIG. 14C).

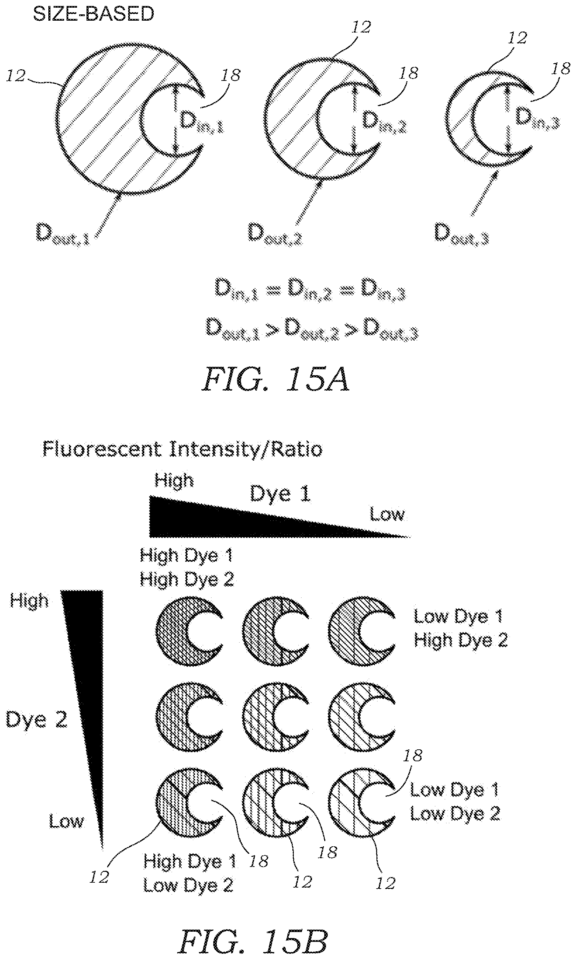

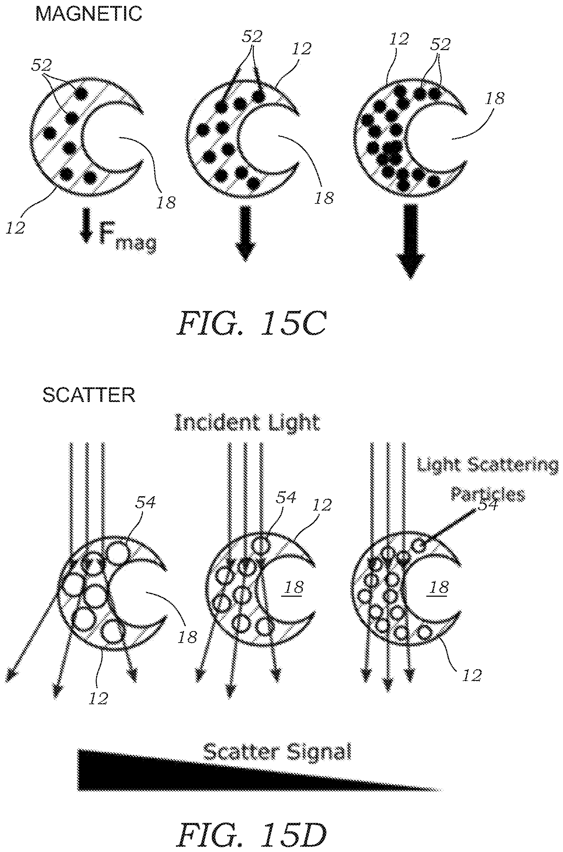

FIG. 15A-15D illustrate an overview of representative embodiments of barcoding. FIG. 15A illustrates how the size of internal cavity is maintained while varying the outer dimension of the drop-carrier particles. Dropicles are identified by size range. In FIG. 15B, a drop-carrier particle is modified with one or more dyes of varying intensity. Unique particle types are defined by intensity or ratio of multiple dye intensities. In FIG. 15C, magnetic particles of varying number or magnetic content are embedded/crosslinked on/into the particles allowing for separation by relative magnetic force. In FIG. 15D, varying number and size of light scattering particles are embedded/crosslinked onto or into the drop-carrier particles allowing for separation based on relative amount/intensity of light scattering or scattered angle.

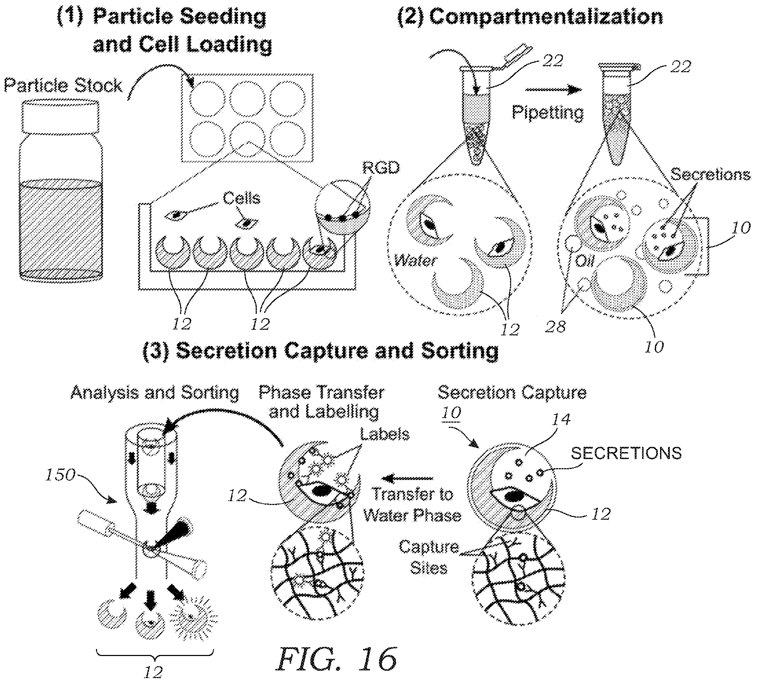

FIG. 16 illustrates an illustrative general workflow for cell secretion analysis and optional sorting. Drop-carrier particles are seeded into a well plate, flask, etc. and cells are then seeded into the drop-carrier particle cavities or voids. After cells attach, drop-carrier particles and associated cells are formed into dropicles to compartmentalize by pipetting or other mixing action with an oil-based continuous phase. Cells are incubated and secreted molecules are captured onto associated drop-carrier particles. Drop-carrier particles with associated cells are transferred back into the water phase and captured secretions are labeled with fluorescent molecules through, for example, a second affinity interaction. Drop-carrier particles and associated cells can then be analyzed and sorted using a flow cytometer.

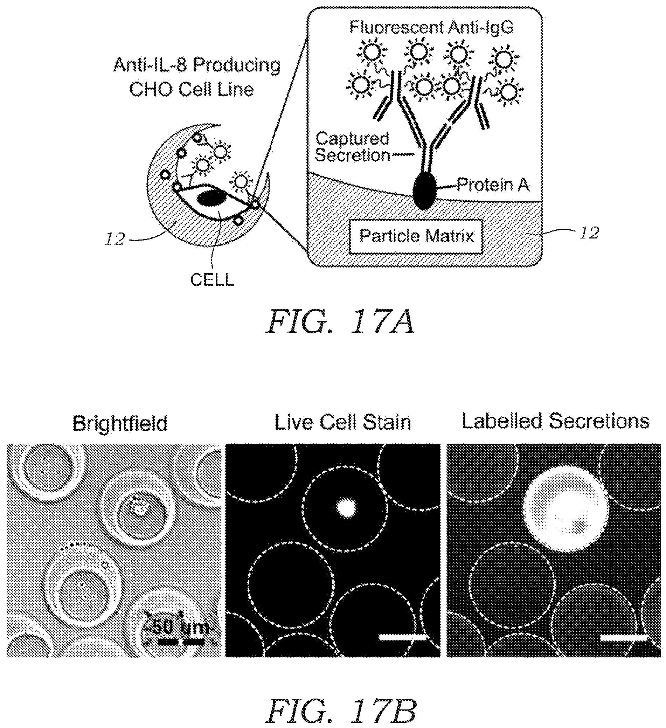

FIG. 17A schematically illustrates an embodiment in which antibodies secreted from a cell are captured on a drop-carrier particle associated with a cell. In this example, Anti-IL-8 secreting CHO cells are incubated in dropicles, and secreted antibodies are captured by protein A conjugated to drop-carrier particles. After transferring back to an aqueous phase, the capture antibodies are labeled with fluorescent Anti-IgG for visualization.
FIG. 17B illustrates representative microscopy images showing high fluorescent signal above a threshold on drop-carrier particles associated with cells and no fluorescent signal or low fluorescent signal for drop-carrier particles without cells attached. A brightfield image (left) shows the drop-carrier particles and a cell in the cavity of one drop-carrier particle. The middle image shows a fluorescence microscopy image of the cell using a fluorescent stain that indicates a live cell. The right image shows a fluorescence microscopy image of the Anti-IgG staining of the secreted antibody covering the drop-carrier particle.

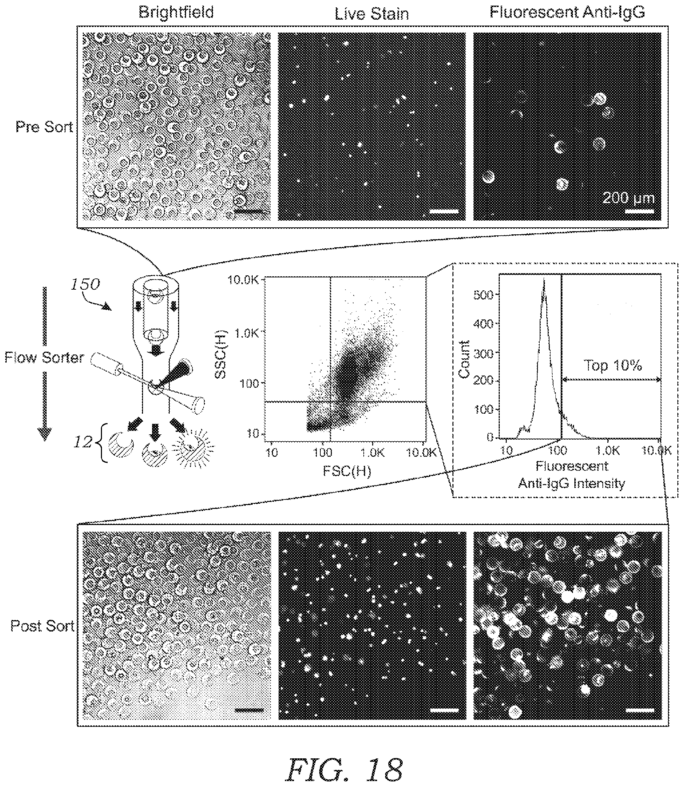

FIG. 18 illustrates high-throughput sorting of drop-carrier particles with associated secreting cells using a fluorescence activated cell sorter. The top row of images shows the drop-carrier particles and associated cells prior to sorting. Brightfield imaging is shown on the left, fluorescence imaging showing live cells stained with calcein AM is shown in the middle, and fluorescence imaging in a separate channel showing captured antibody secretions labeled with Cy5 conjugated secondary antibodies specific to IgG are shown on the right. All three (upper panel) images are for the same field of view. These drop-carrier particles and associated cells are passed through a flow sorter. Forward scatter (FSC) and side scatter (SSC) for drop-carrier particle events in the cytometer are shown in a 2D plot. The upper right quadrant of events are gated and fluorescence intensity in the far-red channel for these events is shown in a histogram (right-side graph showing fluorescent intensity). Microscopy imaging demonstrates accumulation of drop-carrier particles with cells and high concentrations of captured proteins by sorting off high fluorescent signal events above a specified threshold shown in the image as the ` Sorting Gate'. All scale bars are 200 microns.

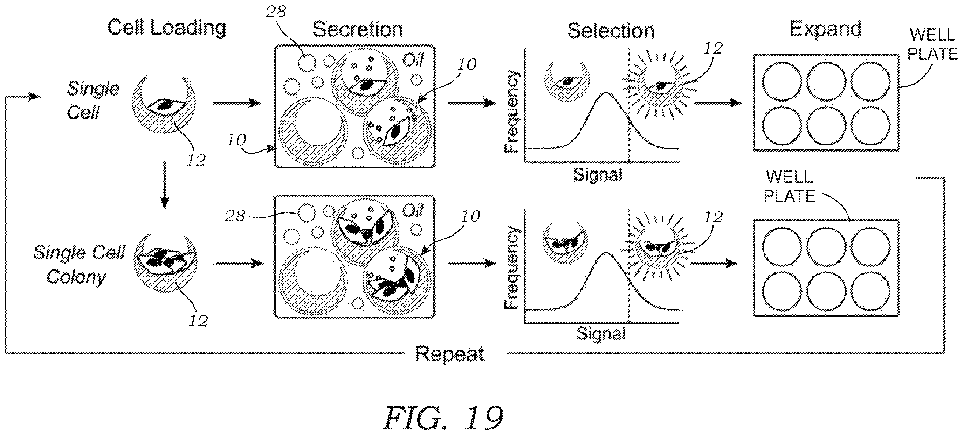

FIG. 19 illustrates an example workflow for performing sorting/analysis of single cells or single cell colonies based on total secretion. Following previously mentioned approaches, single cells can be isolated into drop-carrier particles, and emulsified into dropicles where secretions accumulate without crosstalk and are captured onto drop-carrier particles. The drop-carrier particles can then be transferred back into water, stained to indicate the quantity of secretions, and analyzed/sorted along with the attached cells. Sorted sub populations of cells can then be expanded to perform repeated selection steps. Screening can be performed over multiple cycles to improve selection of desired sub-populations. In a related embodiment single cells seeded in the drop-carrier particles can be grown to create a clonal colony attached to a drop-carrier particle prior to emulsification. This enables combined analysis and sorting based on growth and secretion of a clone.

### Detailed Description of the Illustrated Embodiments

FIG. 1A illustrates one embodiment of a dropicle 10. The term "dropicle" as used herein refers to a solid-phase particle or drop-carrier particle 12 that is contained in, contains or is associated with discrete volumes of dispersed (e.g., water) phase solution or fluid 14 suspended in an immiscible phase 16 (e.g., oil). The drop-carrier particles 12 (or sometimes also referred to as particles 12) are small, sub-millimeter scale (in their longest dimension) and spherically or ellipsoidal-shaped particles that are formed, in one preferred embodiment, from a cross-linked hydrogel material that is hydrophilic in one preferred embodiment. A typical range of dimensions (diameter or longest dimension) for the drop-carrier particles 12 is between about 10 µm and about 500 µm, more preferably between 20 µm and 200 µm and even more preferably between 40 and 120 µm. Each drop-carrier particle 12 has a void volume or cavity 18 formed therein. The void or cavity 18 defines a three-dimensional volume that holds at least a portion of the dispersed phase solution or fluid 14 (e.g., aqueous phase). Typical fluid volumes held within the void or cavity 18 include volumes in the range of about 100 fL and about 10 nL. A length dimension (e.g., diameter for spherical void) of the void or cavity 18 within a drop-carrier particle 12 is several microns, typically more than about 5 µm and less than about 250 µm. In some embodiments, the drop-carrier particles 12 are contained within complete droplets of aqueous phase solution or fluid 14 with a portion of the solution or fluid 14 also being located in the void or cavity 18. This is illustrated in FIG. 1A.

In one embodiment, a droplet-based emulsion system is provided that employs discrete volumes associated with solid-phase drop-carrier particles 12 suspended in an immiscible fluid. In this system, according to one embodiment, a plurality of aqueous dropicles 10 form an emulsion contained in an oil 16. The oil 16 acts as the continuous phase (i.e., the external phase of emulsions) while the aqueous-based dropicles 10 acts as the dispersed phase (i.e., the internal phase of the emulsions, or the phase to be encapsulated). The oil 16 surrounds the dropicles 10 to create a monodisperse dropicle 10 emulsion. Monodisperse refers to the ability of the dropicles 10 to retain substantially the same volume of fluid in each of the dropicles 10.

In another embodiment, a plurality of oil-based dropicles 10 form an emulsion contained in aqueous fluid 16. The aqueous fluid 16 acts as the continuous phase (i.e., the external phase of emulsions) while the oil-based dropicles 10 acts as the dispersed phase (i.e., the internal phase of the emulsions, or the phase to be encapsulated). The aqueous fluid 16 surrounds the dropicles 10 to create a monodisperse dropicle 10 emulsion. This embodiment is the reverse of the prior embodiment where the drop-carrier particle 12 is hydrophobic and the surrounding continuous phase is aqueous-based.

FIG. 1A illustrates an embodiment of the drop-carrier particle 12 that includes a void or cavity 18 that interfaces, communicates with, or opens to the outer surface of the drop-carrier particle 12. As explained herein, the void or cavity 18 may be formed as a subtracted void or cavity that takes the shape of a sphere, creating a final drop-carrier particle 12 with a crescent-shaped cross-section such as that illustrated in FIG. 1A. The inscribed void or cavity 18 intersects the spherical or elliptical envelope at its surface in order to create a pathway for fluid filling (and also access for cells, beads, and other micro-objects). In one preferred aspect, the void or cavity 18 intersects the spherical or elliptical envelope at a narrow opening (i.e., a low fraction of the actual surface area of the spherical or elliptical envelope of the drop-carrier particle 12). In some embodiments this fractional area defined by the opening is <33% of the overall spherical/elliptical envelope or surface area of the drop-carrier particle 12, in others <10%, and in further embodiments the fractional area is <5%.

Alternatively, in some embodiments the subtracted void or cavity 18 does not intersect the spherical envelope's surface. For example, FIG. 1B illustrates one such embodiment of a drop-carrier particle 12 that includes a void or cavity 18 that is located completely internal to the three-dimensional hydrophilic drop-carrier particle 12 and does not intersect with a surface of the three-dimensional hydrophilic drop-carrier particle 12. In this embodiment, the material that forms the drop-carrier particle 12 may be made permeable or semi-permeable so that fluids, reagents, and/or sample may diffuse through the drop-carrier particle 12 and into the void or cavity 18. Likewise, reaction products in some embodiments, may be able to diffuse out of the drop-carrier particle 12 depending on size. The particular size cut-off for diffusion may be tuned by adjusting the porosity of the underlying material that forms the drop-carrier particle 12. Typically, larger species such as cells, beads, or other micro-objects would not be able to diffuse through the drop-carrier particle 12 while fluids and small molecules and other species are able to diffuse through the drop-carrier particle 12. In a related embodiment, the void or cavity 18 holds or carries a porous polymer material that allows for molecular diffusion of sample molecules and reagents from the surrounding fluid (e.g., uncrosslinked dextran). Preferably, in this embodiment, the porous polymer material located in the void or cavity 18 is more porous than the underlying material that forms the drop-carrier particle 12.

In some embodiments, the surface of the drop-carrier particles 12 may be decorated with one or more reactive or binding moieties 20 as seen in FIGS. 1A, 12, 13A, 13B, 16, 17A to enable dropicle 10 functionalization and dropicle 10 compatibility with many standard assays. For example, reactive or binding moieties 20 may be formed on the surface of the drop-carrier particles 12 within the void or cavity 18. Binding or reactive moieties 20 may include, by way of example, nucleic acids, peptides, cell adhesion peptides, catalysts, enzymes, antibodies, primers, antigens, aptamers, biotin, or biotin/streptavidin complexes. Orthogonal reactive chemistries known to those skilled in the art may also be used for conjugation of reactive or binding moieties 20 to drop-carrier particles 12.

As explained herein, in embodiments making use of hydrophilic drop-carrier particles 12, the formation of dropicles 10 is achieved by combining a suspension of drop-carrier particles 12 in an aqueous phase with oil (and optional surfactant) and mixing (e.g., by vortexing, pipetting, etc.) such as that illustrated in FIG. 2. Agitation and fluid dynamic shearing from mixing generate the emulsions of decreasing size. After continued agitation, drop-carrier particles 12 contained within the droplets act as a size restraint that prevents further shrinking of the droplet. Solid-templated droplets in which the drop-carrier particles 12 contain voids or cavities 18 can also be thermodynamically stabilized. With increasing temperature or time, dropicles 10 do not coalesce in the same manner that unsupported drops of a dispersed phase in an aqueous phase will coalesce due to a decrease in interfacial energy of the system upon coalescence. Both pipetting and vortexing may be used to form dropicles 10. Using mixing by pipetting and/or vortexing one can achieve uniform emulsions of dropicles 10 along with smaller satellite droplets containing no drop-carrier particles 12. In one embodiment of a uniform particle-templated emulsion substantially all of the particle-containing drops (e.g. > 95%, > 99%, or > 99.9%) are each associated with a single drop-carrier particle 12. Due to their unique size range, dropicles 10 can easily be identified using image analysis or filtered from the surrounding smaller satellite drops (i.e., background droplets generated during dropicle 10 formation) using standard filtration techniques. Satellite drops also will not contain reactive moieties 20 that are attached to drop-carrier particles 12 and therefore do not proceed with reactions as occurs within dropicles 10. When the total aqueous volume of the sample is less than or equal to the sum of the volumes that can be supported by each of the drop-carrier particles 12 mixed with the sample, satellite droplets can be significantly reduced or eliminated.

In general, it was found that for the formation of dropicles 10 pipetting performed better then vortexing for forming monodisperse dropicles 10 with a large fraction of aqueous emulsion containing only a single drop-carrier particle 12 (see, e.g., FIGS. 4B and 4E). Dropicle formation can be improved by first breaking up an initial suspension of drop-carrier particles 12 in oil either by mechanically disturbing / tapping the reagent tube containing the samples, or by using a pipette with a larger diameter opening (e.g., 1000 µL pipette), and then breaking up into finer emulsions by vortexing or pipetting with a pipette with a smaller diameter e.g., 100, 200 µL pipette).

The concentration of surfactant present in the organic phase also affects the monodispersity of the formed dropicles 10 and the fraction of volumes that contain a single drop-carrier particle 12. As a general trend, increasing the concentration of surfactant in the oil phase led to better dispersion of drop-carrier particles 12 into single-particle-containing dropicles 10. Pico-Surf concentrations above 0.5% v/v in Novec 7500 led to high monodispersity. In a preferred embodiment 2% v/v Pico-Surf in Novec 7500 is used as the continuous phase, resulting in almost complete monodispersity of the formed dropicles 10. Further improvements to dropicle monodispersity can be attained through addition of aqueous surfactants within the aqueous phase (e.g., Pluronic F-127, Triton X-100). In one embodiment, 0.1% Pluronic F-127 is included in the aqueous phase to reduce particle aggregation and reduce interfacial tension, resulting in more uniform dropicles 10. In another embodiment, addition of 1% w/v PEG-5000 in the aqueous dispersed phase reduced particle 12 aggregation, yielding more uniform dropicles 10.

It should additionally be noted that factors such as the polymer composition of drop-carrier particles 12, or the salt concentration of the dispersed phase, influences the affinity of drop-carrier particles 12 for one another in solution. For example, spherical drop-carrier particles 12 formed from higher wt% PEG were preferred. 6 wt% PEG was more preferable than 3 wt%. 12 wt% PEG drop-carrier particles 12 were even more preferable. Therefore, the polymer backbone formulation can affect the surfactant concentrations needed to properly disperse drop-carrier particles 12 in solution to form monodisperse dropicles 10. Additionally, dropicle monodispersity was increased using low salt solutions, such as DI water.

The choice of oil phase can also influence the function of the resulting dropicles 10. For example, Novec-7500 infused with Pico-Surf surfactant was preferred in forming more uniform dropicles 10 than alternative oil phases such as Fluorinert^{™} FC-40 oil with RAN surfactant, although this condition also was capable of forming dropicles 10. However, Fluorinert^{™} FC-40 with RAN surfactant displayed improved thermostability when compared to Novec-7500 with Pico-Surf. Thus, certain applications can benefit from an exchange of oil phase. For example, dropicles 10 may be formed in Novec-7500 to yield monodisperse emulsions, after-which Novec oil can be removed and replaced with Fluorinert^{™} FC-40 for high temperature applications, such as thermocycling for DNA amplification.

FIG. 2 illustrates one method of forming dropicles 10. First drop-carrier particles 12 that are either dried or suspended in a dispersed phase are provided. These may be contained in a holder or vessel 22 (e.g., Eppendorf tube is illustrated although other holders or vessels can also be used). If no dispersed phase is present, then the dispersed phase (e.g., aqueous phase) is added to the holder or vessel 22. In another embodiment, the initial dispersed phase may be added to or exchanged with another dispersed phase as seen in operation 100 in FIG. 2. FIG. 2 shows the drop-carrier particles 12 contained in the dispersed phase 14. Next, as seen in operation 110, the continuous phase 26 is added (e.g., oil phase) along with an optional surfactant. The holder or vessel 22 is then subject to an agitation operation 120 which may include vortexing, pipetting, and the like. The agitation operation 120 generates the dropicles 10 and, in some instances, satellite droplets 28. The satellite droplets 28 may be removed using, for example, filtration of the mixture. The formation of satellite droplets 28 may be minimized by controlling the volume of disperse phase that is added during formation of the dropicles 10.

FIG. 3 illustrates the formation of dropicles 10 with a 5 µM FITC dextran (500 kDa) solution as the dispersed phase 14, and Novec^{™} 7500 fluorinated oil with 0.5% Pico-Surf^{™} surfactant added as the continuous phase 16. FIG. 3 illustrates the drop-carrier particles 12 contained in the dispersed phase 14 prior to emulsification (left) and after emulsification where dropicles 10 are formed. Corresponding images are provided below before emulsification (left image) and after emulsification (right image). The fluorescent images show distinct signal within the void or cavity 18 of the dropicles 10 (right image).

FIG. 4A illustrates images of the resulting emulsions formed (using spherical particles 12 to template water droplets in a continuous phase that is composed of Novec^{™} 7500 fluorinated oil with 0.5% Pico-Surf^{™} surfactant). The dropicles 10 are shown in the brightfield image (left image) and the spherical drop-carrier particles 12 are shown in the fluorescent channel (right image). Both highly variably sized satellite droplets 28 are shown as well as uniform dropicles 10 which overlay with the fluorescent-stained drop-carrier particles 12. FIG. 4B illustrates a graph showing a count of droplets as a function of drop-carrier particles 12 per droplet. Of the droplets containing drop-carrier particles 12, nearly all contain only a single drop-carrier particle 12. FIG. 4C illustrates a graph showing droplet size distribution showing a range of non-uniform satellite droplets 28 along with a uniform region of droplets formed with encapsulated drop-carrier particles 12 (i.e., dropicles 10).

FIG. 4D illustrates a graph showing droplet size distribution showing a range of non-uniform satellite droplets 28 along with a uniform region of droplets formed with encapsulated crescent shaped drop-carrier particles 12 (i.e., dropicles 10). Crescent drop-carrier particles 12 were used to template water droplets in a continuous phase comprised of Novec^{™} 7500 fluorinated oil with 0.5% Pico-Surf^{™} surfactant. FIG. 4E illustrates a graph showing a count of droplets as a function of drop-carrier particles 12 (crescent-shaped) per droplet. Of the droplets containing drop-carrier particles 12, nearly all contain only a single drop-carrier particle 12.

FIG. 5 illustrates the separation of dropicles 10 from satellite droplets 28 according to alternative embodiments. In these embodiments an external force, or combination of external forces is applied (e.g., magnetic, gravitational, buoyant, drag, centripetal, etc.) such that dropicles 10 and satellite droplets 28 experience a different force (magnitude and/or direction). For example, the drop-carrier particles 12 may contain a magnetic material along with an externally applied magnetic field that is used to separate the dropicles 10 from the satellite droplets 28 that do not respond to an applied magnetic field.

For example, FIGS. 6A and 6B illustrate images of PEG-Vinyl Sulfone microgel particles that were gelled in the presence of thiolated magnetic particles (1 µm) and subsequently emulsified in fluorinated oil and then separated. FIG. 6A illustrates that initial emulsification resulted in aqueous droplets (AD) encapsulating magnetic microgel particles in a large background of empty satellite droplets 28. FIG. 6B illustrates that after application of a magnetic field, emulsified magnetic microgel particles can be separated from the background of empty satellite droplets 28.

To manufacture the drop-carrier particles 12 with the void or cavity 18, a microfluidic droplet generator device 30 is provided which is used to form a monodisperse emulsion in an oil phase whereby the internal dispersed phase comprises an aqueous two-phase system. One part of the aqueous two-phase system is a crosslinkable hydrogel precursor such as poly(ethylene glycol) (PEG) or a derivative thereof. The other part of the aqueous two-phase system is a polymer such as dextran. The two phases of the aqueous two-phase system then separates into distinct regions within the formed droplets. Then, one component of the two-phase system (namely, a crosslinkable component) is crosslinked to form the drop-carrier particle 12. FIG. 7A schematically illustrates the process of creating drop-carrier particles 12 having a void or cavity 18 formed therein. As seen in FIG. 7A, an aqueous two-phase system is used to form the drop-carrier particles 12. In this specific embodiment the aqueous two-phase system includes PEG or a PEG-derivative (e.g., 10 kDa 4-arm PEG-norbornene) which is the crosslinkable component (using a crosslinker) and dextran (e.g., 40 kDa) which is not crosslinked. The microfluidic droplet generator device 30 is used to generate an emulsion of the aqueous two-phase system within an oil phase. The droplet that contains the two aqueous phase components (e.g., PEG and dextran) separate after droplet formation in a phase separation operation. After phase separation, the PEG or PEG-derivative component is crosslinked into a gel. For example, a crosslinker such as diothiothreitol (DTT) in the presence of a photoinitiator (e.g., Irgacure^{®} 2959, LAP, etc.) within the PEG or PEG-derivative component is then subject to light exposure (e.g., UV excitation) to initiate crosslinking. Of course, other crosslinkers such as cysteine containing peptides or other dithiols or multi-arm crosslinkers may also be used. In another embodiment, a thiol-ene reaction between multi arm PEG-Norbornene + dithiol crosslinkers is performed initiated via UV light and photoinitiator. In related embodiments, either the PEG and/or polymer phases can contain a combination of one or both the photoinitiator and crosslinker. After crosslinking the drop-carrier particles 12 can be washed to remove the oil phase and the dextran phases.

FIG. 7B illustrates the layout of the microfluidic droplet generator device 30 which is used to create the drop-carrier particles 12 having the voids or cavities 18 using flow focusing. The microfluidic droplet generator device 30 includes a number of microfluidic channels 32, 34, 36 that converge/intersect into a droplet generation zone or region 38 where emulsions (droplets) are generated. The generated droplets travel down another microfluidic channel 40 that may lead to a chamber or region 42 where the droplets may accumulate and be temporarily stored. An outlet 44 in the device 30 may be used to remove the droplets/drop-carrier particles 12. Each microfluidic channel 32, 34, 36 includes a respective inlet 46, 48, 50 for inputting the various components. In this example, PEG (e.g., 4-arm 10 kDa peg-norbornene) and dextran (e.g., 40 kDa) phases are co-flowed in the microfluidic device 30 to generate monodisperse emulsions in oil (e.g., Novec^{™} 7500 + 0.25% Pico-Surf^{™}). In one embodiment, a first inlet 46 that leads to microfluidic channels 32 is used to deliver the oil phase along with the surfactant. A second inlet 48 that leads to microfluidic channel 34 is used to deliver the dextran. A third inlet 50 that leads to the microfluidic channel 36 is used to deliver the PEG as well as the crosslinker and the photoinitiator. In another embodiment a first inlet 46 that leads to microfluidic channels 32 is used to deliver the oil phase along with the surfactant. A second inlet 48 that leads to microfluidic channel 34 is used to deliver dextran along with crosslinker. A third inlet 50 that leads to the microfluidic channel 36 is used to deliver the PEG as well as the photoinitiator. Separation of polymer precursor and crosslinker prior to droplet generation is especially useful when using highly reactive chemistries which may begin to crosslink within the sample syringe or channel inlet, halting flow. In another embodiment crosslinker is not included in the PEG or dextran phase, but is instead injected in its own additional inlet and connecting channel. This is advantageous when the crosslinker does not easily dissolve into the dextran phase, for example larger thiolated PEG crosslinkers.

The PEG and dextran phases separate once droplets are formed and the PEG phase is then crosslinked. As noted above, in one embodiment UV excitation is used to crosslink the gels. More specifically, photoinitiator (2% w/v Lithium phenyl-2,4,6-trimethylbenzoylphosphinate (LAP)) is pre-dispersed in the PEG phase, and a crosslinker (DTT) is pre-dispersed in the dextran phase. After phase separation UV light is used to generate radicals which induce thiol-ene reaction between the PEG-norbornene and DTT crosslinkers to create a gel matrix that forms the drop-carrier particles 12. Crosslinking may occur in the microfluidic droplet generator device 30 or "off chip," after droplets exit through an outlet of 44 the microfluidic droplet generator device 30. After crosslinking the drop-carrier particles 12 are washed to remove the oil and dextran phases.

In another embodiment, a change in pH levels is used to crosslink the drop-carrier particle 12. For example, PEG-Vinyl sulfone/maleimide + dithiol crosslinker is used at lowered pH to prevent gelation prior to drop formation in a microfluidic droplet generator device 30. The pH is then increased in the dispersed phase by addition of an organic base (e.g., triethylamine) in the oil phase downstream to initiate the crosslinking reaction. In a related embodiment a parallelized step emulsification droplet generator microfluidic device 30, as described in, de Rutte, J. M., Koh, J., Di Carlo, D., Scalable High-Throughput Production of Modular Microgels for In Situ Assembly of Microporous Tissue Scaffolds. Adv. Funct. Mater. 2019, 29, 1900071, which is incorporated herein by reference, operates on a pre-polymer phase mixed with the dextran phase in a single solution to generate monodisperse drops prior to phase separation and polymerization (e.g., via UV light or pH change). In all of the above embodiments, following crosslinking of the PEG, the dextran phase can be removed and the desired aqueous phase added or substituted to form the dropicles 10. Note that in some embodiments, such as when forming hollow drop-carrier particles 12, as exemplified in FIG. 1B, the internal dextran phase can be maintained within the void or cavity 18.

FIG. 8A illustrates a phase diagram of example PEG-dextran aqueous two-phase system. By tuning the relative concentrations of both the PEG and dextran one can tune the morphology and/or volume of the void space or cavity 18 within the drop-carrier particle 12. Here, 20 kDa 8-arm PEG vinyl sulfone and 40 kDa dextran solutions were used. Emulsions were formed using microfluidic droplet generator device 30 of FIG. 7B. The morphology of the PEG and dextran regions can be tuned by changing their relative concentrations. At dilute concentrations the dextran and PEG phases remain mixed. At less dilute concentrations the PEG and dextran undergo phase separation. As the dextran to PEG concentration ratio is increased in the final droplet, the volume fraction of the inner dextran region is increased. As total concentration of PEG and dextran is increased, interfacial tension between the two phases causes protrusion of the dextran region (upper right-hand images). Droplets shown are approximately 100 micrometers in diameter. For conditions with high concentrations of PEG and dextran, phase separation was found to be rapid (<1 second). At conditions near the binodal it was found that phase separation would take longer (>1 second).

FIG. 8B illustrates a phase diagram of example PEG-dextran aqueous two-phase system. In this embodiment, 10 kDa 4-arm PEG-norbornene and 40 kDa dextran solutions were used. By adjusting the concentrations of PEG and dextran both the morphology of the droplets and the resulting UV crosslinked drop-carrier particles 12 can be tuned. At dilute concentrations the PEG and dextran phases remain mixed as a single phase (below the binodal line). At higher concentrations (above the binodal), PEG and dextran phase separate into distinct PEG-rich and dextran-rich phases within the droplet. As the total concentration of PEG and dextran is increased the interfacial tension between the two phases increases causing the dextran phase to be in contact with a larger portion of the oil interface (Top right images). After crosslinking with UV light, the resulting drop-carrier particles 12 (excluding the one example that did not undergo phase separation) maintain similar cavity volumes (relative to total size of drop-carrier particle 12), but have increasing cavity opening size. As the relative ratio of dextran to PEG concentration is increased (bottom right) the volume of the dextran rich phase is also increased. After UV crosslinking, drop-carrier particles 12 with larger volume of dextran rich phase had proportionally larger cavities or voids 18. Additionally, it was found that for conditions near the binodal curve, especially with higher amounts of dextran, after crosslinking the cavities remain fully enclosed (the void does not touch the envelope of the outer particle 12).

FIG. 9 illustrates a range of drop-carrier particles 12 fabricated using the aqueous two-phase system approach using the microfluidic droplet generator device 30. After crosslinking and washing steps, drop-carrier particles 12 swell to approximately 130% their original diameter. For conditions shown here 20% w/v 40 kDa dextran and 15% w/v 4-arm PEG-norbornene (10 kDa) were used. The 100 micrometer and 80 micrometer diameter drop-carrier particles 12 were fabricated using a microfluidic droplet generator device 30 with a microfluidic channel height of 70 micrometers and width of 60 micrometers at the junction, PEG flow rate of 4 microliter/min, dextran flow rate of 1 microliter/min, and oil flow rate of 10 and 20 microliter/min, respectively. The 55, 45, and 40 micrometer diameter drop-carrier particles 12 were fabricated using a microfluidic droplet generator device 30 with a microfluidic channel height of 18 micrometers and width of 35 micrometers at the junction, PEG flow rate of 2 microliter/min, dextran flow rate of 0.5 microliter/min, and oil flow rate of 5, 10, and 20 microliter/min, respectively.

FIG. 10A illustrates an image of non-crosslinked emulsions as well as a graph of drop count as a function of diameter for the outer PEG envelope and dextran internal component of PEG-dextran emulsions formed in fluorinated oil. Image analysis shows high-uniformity for the diameters of both the PEG (CV=0.75%) and dextran phase (CV=1.45%). CV is coefficient of variation. FIG. 10B illustrates images of crosslinked drop-carrier particles 12 dispersed in water and imaged using fluorescence microscopy. Drop-carrier particles 12 were conjugated with a TRITC-maleimide dye to view them in a fluorescent channel - a similar fluorophore conjugation step can be used for fluorescent barcoding of drop-carrier particles 12. FIG. 10B also illustrates a graph of particle count as a function of diameter for the crosslinked drop-carrier particles 12. Distribution of particle size is uniform (CV<5%).

FIGS. 10C and 10D illustrates drop-carrier particles 12 dispersed in water and imaged using fluorescence microscopy. Drop-carrier particles 12 were crosslinked with UV light while passing through the outlet region of the droplet generator device 30. Drop-carrier particles 12 were modified to have biotin groups through the addition of biotin-PEG-Thiol during the fabrication process. Drop-carrier particles 12 were then labeled with Alexa Fluor^{™} 568 streptavidin, which bound to biotin on the surface of drop-carrier particles 12, in order to visualize them fluorescently. Analysis of fluorescent images showed high uniformity (outer diameter CV=1.5%, opening diameter CV=2.1%) as seen in FIG. 10E.

FIG. 11A illustrates theoretical calculations of dropicle 10 volume variation. Here, a dropicle 10 templated by a spherical drop-carrier particle 12 is considered along with a crescent drop-carrier particle 12 (i.e., void or cavity-containing particle) and is compared to a droplet formed by a microfluidic device 30 without any particle 12 contained therein. This analysis builds on the results that the volume within the cavity 18 can be well-controlled while the outer diameter of fluid around the drop-carrier particle 12 is less controlled during the emulsification process. The drop-carrier particle 12 is constrained to a fixed size, and the outer droplet diameter is varied relative to the particle diameter. The variance of the dispersed phase volume compared to the total volume is decreased with increased diameter by using the drop-carrier particle 12 with a cavity or void 18. More specifically, variation in dispersed phase volume decreases as the ratio of the internal cavity 18 diameter to the outer particle diameter increases, which is advantageous to performing uniform reactions in the dropicles 10. As the void fraction for the crescent particle 12 increases, e.g. for Dᵢₙ/Dₒᵤₜ = 0.50 and 0.75, the behavior approaches the ideal situation of a spherical drop without an internal particle.

FIGS. 11B and 11C illustrates theoretical calculations of reagent encapsulation efficiency in dropicles 10. Here, a dropicle 10 is considered that is templated by a spherical drop-carrier particle 12 and a crescent drop-carrier particle 12 (i.e., void or cavity-containing particle). The encapsulated reagent or sample is assumed to not freely diffuse into the particle matrix. The encapsulation efficiency is defined as the fraction of sample volume in the initial concentrated suspension of drop-carrier particles 12 that is associated with the dropicles 10 after dropicle formation. Reagent that is not encapsulated is expected to form satellite droplets 28. The void fraction of the initial particle suspension is defined as the fraction of the total volume (sample + particles) that occupies the regions outside of the drop-carrier particle 12 envelope. In order to normalize calculations between crescent particles 12 and spherical particles 12 the inner cavity 18 volume is not considered as part of the initial void fraction. FIG. 11B demonstrates increased encapsulation efficiency for particles 12 with relatively larger cavities as well as for dropicles 10 with thicker outer water layers. In both cases the particle 12 takes up a smaller fraction of the final dropicle 10 volume allowing encapsulation of relatively more sample volume. FIG. 11C demonstrates that increasing the concentration of drop-carrier particles 12 before formation of dropicles 10 (reducing void fraction) increases encapsulation efficiency. In the case where the void fraction is increased, there is relatively more reagent or sample in the system and dropicles 10 quickly saturated resulting in formation of a larger volume of satellite droplets 28 and thus lower encapsulation efficiency.

FIG. 12 illustrates how drop-carrier particles 12 can be decorated with many different reactive moieties to enable particle functionalization and dropicle 10 compatibility with many standard assays. For example, reactive or binding moieties 20 may be formed on the surface of the drop-carrier particles 12 within the void or cavity 18. Binding or reactive moieties 20 may include, by way of example, nucleic acids, peptides, cell adhesion peptides, catalysts, enzymes, antibodies, primers, antigens, aptamers, biotin, or biotin/streptavidin complexes. Orthogonal reactive chemistries known to those skilled in the art may also be used for conjugation of reactive or binding moieties 20 to drop-carrier particles 12.

In one embodiment peptides or larger proteins containing free cysteine groups can be added with thiol-based crosslinkers within the dextran phase. As these peptides merge with the hydrogel phase they can covalently link to thiol reactive sites on the polymer backbone including norbornenes. In order to promote adhesion of CHO cells to drop-carrier particles 12 this approach has been used to include cell adhesive peptides during drop-carrier particle 12 manufacture. A concentration of at least 4 mg/mL of the integrin binding peptide RGD was used within the dextran phase and demonstrated enough adhesive strength to maintain cell association with drop-carrier particles 12 even in the presence of vigorous mechanical agitation, centrifugation and drop-carrier particle sorting. In another embodiment, the peptides or larger proteins containing free cysteine groups can be added into the PEG phase and crosslinked before or after mixing with the dextran phase.

In a second exemplary embodiment, the drop-carrier particles 12 were modified directly with biotin by incorporating anywhere between 0.5 mg/mL - 5 mg/mL of 5kDa biotin-PEG-thiol within the PEG phase during drop-carrier particle 12 manufacture. Upon exposure to UV-light and in the presence of photoinitiator, as described in the various embodiments disclosed herein, the extra thiol groups on these molecules bind to thiol reactive moieties on the hydrogel backbone, yielding drop-carrier particles 12 uniformly decorated with biotin groups. Biotinylated sites are usually also modified with streptavidin groups to enable conjugation to secondary biotinylated molecules. The amount of streptavidin used can be adjusted based off the desired number of binding sites per particle. It was experimentally determined that in many embodiments centered around capture of secreted proteins from individual cells, 8-10 µg/mL of streptavidin is sufficient to coat the exterior of drop-carrier particles 12 and yield secretion signal over a wide dynamic range. However, in other embodiments in which cells are attached to particles 12 through biotin-streptavidin reactions and secretions are simultaneously captured on drop-carrier particle 12 surfaces using biotinylated capture antibodies, higher concentrations of streptavidin have been used ranging from 10 µg/mL - 250 µg/mL. Of particular note, streptavidin is normally added to drop-carrier particles 12 in PBS, as exogenous biotin is a common additive in cell culture media and may pre-saturate many of the available binding sites.

FIGS. 13A and 13B illustrates how digital assays such as PCR (FIG. 13A) and ELISA (FIG. 13B) can be carried out in dropicles 10. Drop-carrier particles 12 functionalized with nucleic acids or antibodies are mixed in aqueous solution with the appropriate assay reagents (e.g., target DNA, analytes, reporter dyes, secondary antibodies, primers, DNTPs, polymerases). Analytes of interest preferentially self-associate with the surface of drop-carrier particles 12 allowing subsequent washing to remove background signals. The drop-carrier particles 12 are then emulsified through mechanical agitation to form dropicles 10 isolating analytes and generated signals (e.g., through enzyme amplification) within the droplet volume or on the drop-carrier particle 12 themselves. In embodiments where signals are captured directly on the drop-carrier particles 12, the emulsion may be broken and readouts can be conducted directly by observing fluorometric or colorimetric signals on drop-carrier particles 12 through fluorescence microscopy or flow cytometry (e.g., using flow cytometer 150). In embodiments where signal accumulates within the dropicle 10 but is not associated directly with the drop-carrier particle 12, dropicle 10 emulsions can be analyzed directly by observing fluorescent or colorimetric signal changes through fluorescence microscopy or other fluorescence imaging modalities, or some commercial flow cytometry systems which are compatible with an oil continuous phase 16.

FIGS. 14A-14C illustrate that dropicle emulsification does not affect cell viability. Jurkat cells stained with hoescht and calcein were suspended in aqueous solution along with drop-carrier particles 12. Drop-carrier particles 12 were emulsified through mechanical agitation in fluorinated oil to form dropicles 10 containing cells. Dropicles 10 were imaged via fluorescence microscopy in several channels including brightfield (FIG. 14A) to visualize cell morphology, DAPI to visualize the hoescht-stained nucleus (FIG. 14B), and FITC to visualize the calcein-labeled live cells (FIG. 14C).

FIGS. 15A-15D illustrate an overview of representative embodiments of barcoding incorporated into drop-carrier particles 12. FIG. 15A illustrates how the size of the internal void or cavity 18 is maintained while varying the outer dimension of the drop-carrier particles 12. Dropicles 10 with unique chemistry or properties are identified by size range. In FIG. 15B, a drop-carrier particle 12 is modified with one or more dyes of varying intensity (in this embodiment two dyes are illustrated of varying intensity). Unique drop-carrier particle types are defined by intensity or ratio of multiple dye intensities (e.g., Dye 1 :Dye 2 or Dye 2:Dye 1). In FIG. 15C, magnetic particles 52 of varying number or magnetic content are embedded/crosslinked on/into the drop-carrier particles 12 allowing for separation by relative magnetic force. In FIG. 15D, varying number and size of light scattering particles 54 are embedded/crosslinked onto or into the drop-carrier particles 12 allowing for separation or separate analysis of unique drop-carrier particle type 12 based on relative amount/intensity of light scattering or scattered angle.

### Advantages of Dropicle System

A distinct advantage of the system that uses dropicles 10 is the ability to create a large number of uniform droplets in a short period of time (~1 min). For example, consider the case where a sample of 10 million cells is to be encapsulated for single cell analysis. Single Poisson distribution loading into microfluidically-generated droplets requires production of 10⁸ droplets (assuming 10% encapsulation efficiency). A typical microfluidic droplet generator device 30 produces droplets at a rate of 1000 Hz, requiring 28 hours to encapsulate the entire cell population. In certain cases, encapsulation of a secondary bead/particle is necessary (e.g., drop-seq). In this situation double Poisson loading would require production of 10⁹ drops to ensure encapsulation of a single bead and single cell (1% bead+cell encapsulation efficiency). In this case, time for encapsulation would be approximately 11.7 days. Drop-carrier particles 12, however, can be produced in large quantities and at short time scales ahead of time, stored, and shipped to a user. The user can then perform the emulsification step to form dropicles 10 massively in parallel using simple mixing steps in a bulk solution allowing for encapsulation of large numbers of cells.

### Use of surfactants, surfactant mixtures, oils

The amount of surfactant in the continuous phase can be tuned to adjust interfacial tension between the immiscible phases to optimize droplet break up and dropicle 10 formation. Surfactants (non-ionic, e.g., Pluronic, or ionic) in the dispersed phase may also be added to further adjust the interfacial tension as well as reduce aggregation of the drop-carrier particles 12 in the dispersed phase. Oils used for dropicle 10 formation can be adjusted depending on intended use. For example, fluorinated oils (Novec^{™} 7500 3M, FC-40 3M, etc.) may be used with comparable surfactants (Pico-Surf^{™}, RAN Surfactant, etc.) for dropicle formation. These oils are particularly suited for analysis of biological analytes due to their high degree of biocompatibility. In other embodiments different oils (e.g., silicone oils, mineral oils, plant-derived oils, animal-derived oils, long-chain hydrocarbons, organic solvents) may be desired to allow transfer of reagents between dropicles 10, change of pH within dropicles 10, etc. In other embodiments the drop-carrier particles 12 are fabricated out of a hydrophobic material (e.g., Polypropylene glycol) diacrylate, Trimethylolpropane ethoxylate triacrylate, Hexanediol diacrylate, Hexanediol diacrylate + Lauryl acrylate, 1H, 1H,6H,6H-Perfluoro-1,6-hexanediol diacrylate, or methacryloxypropyl terminated polydimethylsiloxane) and are dispersed into an oil phase which then is mixed with an aqueous phase to create oil-in-water dropicle 10 emulsions.

### Drop-carrier particle to dispersed volume ratio

The relative number of drop-carrier particles 12 in the dispersed phase 14 can be optimized to achieve efficient and consistent dropicle 10 formation as well as to prevent excess formation of satellite droplets 28. For higher dispersed volume ratios there is a lower fraction of dispersed volume associated with the dropicles, leading to higher satellite droplet formation. At lower volume ratios there is an increase in capture efficiency of reagents and particles (fraction of microscale objects from a sample associated with dropicles 10) into dropicles 10. Note that unlike microfluidic droplet encapsulation in which the fraction of analyte analyzed from a volume depends on the fraction of volume encapsulated, the presence of the solid-phase in a dropicle 10 enables the concentration of analyte on the surface (or within the matrix) of the solid-phase decoupling the volume analyzed from the fraction of analyte that can be analyzed.

### Transfer of dropicles back into dispersed phase

In certain instances, it is desirable to return the drop-carrier particles 12 back into a large volume of the dispersed phase 14 (e.g., aqueous phase) in order to perform additional washing steps, secondary conjugations, run drop-carrier particles 12 through a flow cytometer 150 (FIGS. 13A, 13B, 16, and 18) for analysis/sorting, etc. For a system that uses hydrogel-based drop-carrier particles 12, water, and fluorinated oil, a second surfactant (perfluoro-octanol) can be added into the oil phase 16 to destabilize the emulsions and collect the drop-carrier particles 12 in the aqueous phase 14. More specifically, excess oil and surfactant are removed from the emulsion suspension via pipetting without removing dropicles 10. A 20% solution of perfluoro-octanol in Novec^{™} 7500 fluorinated oil (3M) is then added to the suspension at a volume approximately equal to the remaining suspension volume. Additional aqueous phase 14 is added to dilute the sample to more easily handle the suspension and/or prevent crosstalk between drop-carrier particles 12. The suspension is gently mixed and droplets coalesce after several minutes. The particle suspension can be directly removed from the top of immiscible phases that develop. If desired, additional washing steps can be performed with low density organic phase miscible with the fluorinated oil. The addition of hexane allows for fluorinated oil to be separated above the water phase and can be removed via pipetting. Other methods such as centrifugation and destabilization via electric fields have been utilized to coalesce emulsions and could be potential alternative methods.

### Washing drop-carrier particles for biological assays

Efficient labeling or detection of biological samples requires incubation in the presence of reagents such as antibodies or fluorescent small molecules. Furthermore, assays requiring sequential addition of reagents such as sandwich ELISA rely upon intermediate washing steps to remove residual reagents from previous steps. Here, various methods are described to wash/isolate dropicles 10, as well as sorting in both oil and water phases.

After transfer of drop-carrier particles 12 back into a water phase washing steps may be performed to remove free analytes in solution and prevent cross-talk. In one embodiment the particle suspension is diluted in an aqueous phase and centrifuged to concentrate drop-carrier particles 12 at the bottom of a vessel 22 (for particles that have higher density than water). In one embodiment drop-carrier particles 12 are centrifuged at 2000g for 1 min. In another embodiment drop-carrier particles 12 are centrifuged at 300g for 3 -5 min. Lower centrifugation speeds are advantageous when sensitive cells are used. Supernatant is removed and replaced with a new solution and drop-carrier particles 12 are mixed back into this new solution. This process of centrifugation and removal can be repeated multiple times to increase the level of washing. The new solution may comprise a wash solution or new reagent solution. In another embodiment drop-carrier particles 12 are modified with magnetic particles (e.g., embedded within the gel matrix of the drop-carrier particle 12) to impart magnetic properties and allow for magnetic manipulation/accumulation of drop-carrier particles 12 in a location in a vessel 22 to allow for washing or solution exchanging procedures. In another embodiment, drop-carrier particles 12 can be modified with microbubbles or hollow glass particles to reduce their density and washed/separated using buoyancy force controlled using for example, conjugated microbubbles (BACS).

### Isolation of dropicles from satellite droplets

In order to reduce background signal from satellite droplets 28, dropicles 10 can be separated from satellite droplets 28 using various methods as described herein. In one embodiment, magnetic fields are applied to separate dropicles 10 with magnetically modified drop-carrier particles 12 from satellite droplets 28 which are non-magnetic (See e.g., FIG. 5). Magnetic particles can be embedded in the matrix of the drop-carrier particles 12 by loading them into the solution during microfluidic fabrication. An external magnetic field can be used to attract the magnetically-labeled drop-carrier particles 12 to a location in a vessel 22 or slide separate from the satellite droplets 28, where they can be collected with high purity, imaged, or otherwise analyzed. In another embodiment, well-known size/deformability-based filtration schemes known in the art may be used to separate larger dropicles 10 from smaller background satellite droplets 28. This may include use of well-known microfluidic particle separation technologies that allow for size-based separation of particles and droplets. Example approaches include: inertial microfluidic separation devices, deterministic lateral displacement devices, tangential flow filtration devices, and acoustic or sedimentation-based separation devices that make use of size and/or density differences of particles. Buoyancy differences can also be exploited for separation. For example, dropicles 10 tend to accumulate at top of an Eppendorf tube due to increased ratio of buoyancy to drag, while satellite droplets 28 accumulate below and can be removed partially by pipetting.

### Aqueous two-phase system approach to fabricating drop-carrier particles

Microgel drop-carrier particles 12 containing cavities may be fabricated utilizing aqueous two-phase systems (ATPS) combined with droplet microfluidics (FIGS. 7A and 7B). These microgel drop-carrier particles 12 have internal voids or cavities 18. Generally, one phase of the ATPS should comprise a crosslinkable component, while the other phase should not contain the crosslinkable component. In one embodiment a crosslinkable PEG phase and dextran phase are co-flowed in a microfluidic droplet generator device 30 along with a third oil phase containing surfactant to generate mixed aqueous emulsions in which a uniform fraction of PEG phase and dextran phase is present in each droplet suspended in an oil phase. In certain concentration regimes of PEG and dextran, the two phases separate into distinct spatial locations within a droplet with a distinct morphology (FIG. 8). One spatial location contains an enriched phase containing the PEG component while another spatial location contains the second component of the aqueous two-phase system (e.g., polymer such as dextran). Cross-linking is then induced in the enriched phase containing the PEG component and the formed drop-carrier particles 12 are washed to remove oil and dextran, producing spherical or ellipsoidal PEG particles with voids or cavities 18 inscribed within the PEG drop-carrier particle 12. The shape of the void or cavity 18 corresponds to the shape of the previously dextran-rich region of each droplet.

Crosslinking of the PEG phase can be achieved using a range of techniques. In exemplary approaches both UV and pH-initiated crosslinking of the PEG phase have been demonstrated. For example, PEGDA was cross-linked via chain growth radical polymerization triggered by UV light and photoinitiator (Irgacure^{®} 2959 (1-[4-(2-Hydroxyethoxy)-phenyl]-2-hydroxy-2-methyl-1-propane-1-one), LAP (Lithium phenyl-2,4,6-trimethylbenzoylphosphinate), etc.). In another embodiment, a thiol-ene reaction between multi arm PEG-Norbornene + dithiol or multi-arm thiol crosslinkers is performed initiated via UV light and photoinitiator. In a related embodiment, PEG-Vinyl sulfone/maleimide + dithiol or multi-arm thiol crosslinker is used at lowered pH to prevent gelation prior to drop formation. The pH is increased in the dispersed phase by addition of an organic base (e.g., triethylamine) in the oil phase downstream to initiate the crosslinking reaction.

In one exemplary embodiment drop-carrier particles 12 were fabricated using the following conditions: dextran phase comprising 20% w/v 40 kDa dextran and -1.3% DTT crosslinker in phosphate buffered saline solution (PBS), pH 7 injected at 2.67 µL/min, a PEG phase comprising 17.5% w/v 4-arm PEG-Norbornene, 2% w/v LAP (Lithium phenyl-2,4,6-trimethylbenzoylphosphinate), and 0.5 mg/ml Biotin-PEG-thiol in PBS injected at 8 µL/min, and oil phase composed of 0.25% v/v Pico-Surf^{™} in Novec 7500 oil injected at 44 µL/min into a microfluidic droplet generator device 30 with channel height of 70 microns and junction width of 60 microns. Drop-carrier particles 12 were crosslinked with focused UV light through a DAPI filter set and 4X objective at a power of 50-200 mW/cm² over an approximate duration of 1-3 seconds near the outlet region of the microfluidic device (height 130 microns). Using this approach drop-carrier particles 12 were fabricated at a rate of -1000 per second with high geometric uniformity. To characterize particle 12 uniformity biotin groups on particles were labeled with a solution of 8 microgram/ml Alexa Fluor^{™} modified streptavidin. Drop-carrier particles 12 were then fluorescently imaged in the TRITC channel as shown in FIGS. 10C and 10D. Image analysis showed that the outer diameter of the drop-carrier particles 12 had a mean of 82.5 microns and CV of 1.5%, while the opening diameter had a mean of 51.0 microns and CV of 2.1%.

Drop-carrier particles 12 are collected off-chip as an emulsion within a continuous phase of oil and surfactant. In embodiments where purified drop-carrier particles 12 are desired in an aqueous phase or in embodiments where purified drop-carrier particles 12 in an aqueous phase serve as the starting point of an assay, drop-carrier particles 12 must undergo several washing steps to remove excess surfactant, unreacted biomolecules, and associated organic phase from drop-carrier particles 12. In one embodiment, purified drop-carrier particles 12 were isolated through successive washing steps of Novec-7500 oil, hexane, ethanol, and PBS with 0.1% Pluronic F-127. More specifically, the particle emulsion and associated oil phase are collected off-chip and the majority of the oil phase is removed. For a one mL collection of drop-carrier particles 12, three to five milliliters of PBS and one milliliter of 20% perfluoro-octanol in Novec-7500 is added to the particle emulsion. The solution is gently agitated for a few minutes to break the emulsion and the excess oil removed once more. Next, 3 mL of Novec-7500 oil is added once more and the solution is agitated and centrifuged for 2 mins at 2000 G, after which the excess Novec oil is removed. This process is repeated for a total of 3 washes. Next, 3 mL of hexane is added to the particle suspension agitated, centrifuged, and removed in the same manner. This process is repeated for a total of three additional washes. Next 3, mL of ethanol is added to the particle suspension, agitated, centrifuged and removed in the same manner. This process is repeated for a total of three additional washes. Finally, 3 mL of PBS with 0.1% Pluronic F-127 is added to the particle suspension, agitated, centrifuged and removed in the same manner. This process is repeated for a total of three additional washes. After the last of these washes, drop-carrier particles 12 should be clear of remaining organic solvent, surfactant and unreacted components and can be used in assays. For applications involving cells, drop-carrier particles 12 should be stored for an extended period of time, at least 8-10 hours in a solution of ethanol for sterilization and can be washed additional times to return to an aqueous phase before cell seeding.

### Modifying size and shape

Drop-carrier particle 12 size and the volume of the void or cavity 18 can vary in size and shape. Using the microfluidic droplet generator device 30, the outer particle diameter can be tuned by adjusting the relative flow rate of the oil phase to aqueous phase and/or changing channel geometry. Drop-carrier particles 12 having greater than 100 micrometers in diameter and <40 micrometers in diameter have been fabricated using different channel heights/flow rates. For example, 100 micrometer diameter drop-carrier particles 12 were produced using a device with 70 micrometer channel height with the following flowrates: oil = 10 microliter/min (in one embodiment), PEG = 4µL/min, Dextran = 1 µL/min. 40 micrometer diameter drop-carrier particles 12 were generated using a device with 18 micrometer channel height with the following flow rates: oil = 20 µL/min, PEG = 2µL/min, Dextran = 0.5 µL/min (FIG. 9).

Relative cavity volume and morphology can be tuned by adjusting the concentration and therefore size of the PEG and dextran regions (FIGS. 8A and 8B). At critical concentrations defined by the binodal curve, PEG and dextran will separate into two phases. Interfacial tension between the two phases changes depending on the concentration of PEG and dextran, changing the contact angle between the PEG, dextran, and oil phases. For example, increasing the PEG and dextran concentration increases the interfacial tension between the two phases, leading to a more protruded geometry. By adjusting the relative ratio of PEG and dextran the relative volume of the two regions can be manipulated while keeping morphology consistent.

### Uniformity of production

Generation of monodisperse drops using microfluidics (microfluidic droplet generator device 30) enables high uniformity of the formed drop-carrier particles 12 containing void regions. Specifically, in embodiments described above, the non-crosslinked PEG-dextran emulsions maintain a CV <1% for outer diameter, and CV<2% for equivalent diameter of internal dextran phase (FIG. 10A). The formed drop-carrier particles 12 with voids or cavities 18 defined by the dextran phase-separated region maintain a high uniformity with CV <5% (FIG. 10B).

### Advantage of crescent shaped particles for drop-carrier particles

A distinct advantage of the described geometries over a spherical template is the ability to create dropicles 10 with more uniform reagent volume external of the material space used for the drop-carrier particle 12. This is of particular importance in the encapsulation/quantification of large molecules that cannot freely diffuse into the particle material matrix. Droplets templated by spherical particles contain a small volume fraction external to the particle. This volume fraction is highly sensitive to the relative diameter between the dispersed phase of the emulsion and the drop-carrier particle 12. Creating drop-carrier particles 12 with an internal cavity or void 18, however, significantly improves the uniformity of the volume external to the drop-carrier particle 12 by having a predefined geometry that contains a large portion of the encapsulated fluid volume. In certain embodiments a 3-fold reduction in volume variation of formed drops using drop-carrier particles 12 containing cavities or voids 18 in comparison to solid spherical particles is achieved (see FIG. 11A). Increased uniformity in volume leads to increased uniformity of reactions performed within dropicles 10. Another advantage of the cavity or void 18 is providing space to encapsulate cells, beads, and other microscale objects of interest. Furthermore, manipulation of void or cavity 18 morphology and size can allow for selective capture of objects of specific size, shape, stiffness, etc.

In one example, the size of the void or cavity 18 can be tuned such that there is only space for a single cell, bead, or other microscale object to fit. In this way a higher fraction of dropicles 10 with single cells (or other microscale object of interest) can be achieved when compared to standard Poisson loading where multiple targets may be encapsulated at higher concentrations. In another example, if multiple cell types are present with different size characteristics (e.g. cell type A with mean diameter of 30 microns, and cell type B with mean diameter of 15 microns), different cell types can be selected using drop-carrier particles 12 with void or cavity 18 sizes tuned to the cell sizes. For example, cell type B can first be selectively captured by drop-carrier particles 12 with cavity size opening of 20 microns, and then isolated from the remainder of the cell population. Optionally, a drop-carrier particle 12 with void or cavity 18 size opening of 40 microns can be used in a second step to capture and encapsulate cell type A.

### Other Approaches to fabricate drop-carrier particles

Particles containing cavities suitable to act as drop-carrier particles 12 can be fabricated through use of other sacrificial encapsulated materials. In one embodiment, a single sacrificial particle (size less than a droplet) is encapsulated in a droplet containing a crosslinkable material. The crosslinkable material of the droplet is then crosslinked using various methods known in the art (e.g., those described previously as well as other crosslinking methods known to those skilled in the art), and the embedded sacrificial particle is washed and/or degraded away. Alternatively, in some embodiments, multiple sacrificial particles/materials are encapsulated into the crosslinkable emulsion to create a micro/nano porous cavity network that includes the void volume within each created drop-carrier particle 12. A single sacrificial particle can be encapsulated in each droplet of a microfluidically-generated emulsion through the use of microfluidic inertial ordering prior to droplet encapsulation for example. Example sacrificial particle materials include: alginate, gelatin, MMP cleavable PEG, polystyrene microbeads, etc. For tuning nanoporosity, in one embodiment consisting of porous drop-carrier particles 12 non crosslinkable PEG is added to the crosslinkable PEG phase prior to crosslinking. After crosslinking the gel is washed to remove non-crosslinked PEG and reveal void spaces.

Other embodiments utilize three phase systems to create voids in polymerizable fluids. For example, a three immiscible phase emulsion: e.g., water, fluorinated oil, trimethylolpropane ethoxylate triacrylate (ETPTA) can be used to create a void within an ETPTA polymerized particle. Other embodiments utilize a mask + light-initiated crosslinking of precursor solutions to generate 2D/3D projections into the polymerizable material with an included void space (e.g., transient liquid molding, stop-flow lithography, continuous-flow lithography).

### Storage of drop-carrier particles

In one embodiment, drop-carrier particles 12 are stored while suspended in a dispersed phase 14. Optionally, glycerol or other cryoprotectants can be used to store drop-carrier particles 12 at reduced temperatures (-20 or -80 °C) without particle damage. In other embodiments drop-carrier particles 14 may be dried or lyophilized and then re-dispersed into dispersed phase 14 or a sample fluid comprising the dispersed phase 14 prior to use. This can enable control of drop-carrier particle 12 density in a given dispersed phase volume and allows for dispersion of drop-carrier particles 12 into oil continuous phase with a high efficiency of encapsulation of the disperse phase / sample fluid. Lyophilization is one method to enable long term storage of drop-carrier particles 12. Methods of lyophilization of hydrogel particles without damage to the structure of the hydrogel particle can be found in Sheikhi et al., Microengineered emulsion-to-powder (MEtoP) technology for the high-fidelity preservation of molecular, colloidal, and bulk properties of hydrogel suspensions, ACS Appl. Polym. Mater., 1, 8, 1935-1941 (2019), which is incorporated by reference herein.

### Chemical Modification of Dropicles

In a number of embodiments, the drop-carrier particles 12 described herein are manufactured from polymeric precursors which are widely available and used in many biotechnological applications. As such, there are numerous, well-defined methods of chemical modification that can be applied to the drop-carrier particles 12 prior to emulsification, in order to render them compatible with or useful for various bio-assays. Examples include thiol-ene/thiol-yne click chemistry, Michael addition, NHS ester reactions, azide-alkyne chemistry, biotin-streptavidin binding, antigen-antibody interactions, etc. (FIG. 12). Several embodiments describing these modifications and their applications are presented below.

### Biotinylation of Particles

Biotin is a small molecule that has found tremendous utility in the biotechnology industry because it binds strongly and specifically with the proteins avidin and streptavidin. Additionally, biotin is easily conjugated to larger bio-molecules without affecting their function, enabling their rapid and efficient conjugation to streptavidin coated substrates or other biomolecules of interest. For conjugation to polymers there are numerous commercially available biotins linked to short polymer chains containing reactive groups which are readily crosslinked with a multitude of hydrogel precursors. One preferred method of biotinylating the drop-carrier particles 12 is through the incorporation of biotin PEG-thiol within the PEG solution in the microfluidic droplet generation device 30. More specifically, biotin functionalized hydrogel drop-carrier particles 12 having a void structure has been accomplished by co-flowing 15 wt%, 10 kDa PEG-norbornene in PBS and 5 mg/mL biotin PEG-thiol with 20 wt% dextran containing 1.3% DTT in PBS. Conjugation was verified after removal of surfactant and reconstitution of drop-carrier particles 12 in an aqueous phase by incubation of gels with streptavidin-FITC and the subsequent observation of fluorescence signal. Biotinylation of drop-carrier particles 12 enables conjugation of many common reagents, such as antibodies, proteins, nucleic acids, cells, nanoparticles, and primers, and allows for their use in a wide range of assays including ELISA, PCR, other nucleic amplification assays and flow cytometry.

### Cell Adhesive Peptides

Cell adhesive peptides can also be bound to drop-carrier particles 12 during or after particle manufacture. In one embodiment, RGD peptide (Ac-RGDSPGERCG-NH2) [SEQ ID NO: 1] or another integrin binding peptide or derivative peptide can be incorporated into the precursor solution and covalently crosslinked into the polymer backbone through reaction with a cysteine group present within the peptide. Integrin binding peptides promote cellular adhesion onto underlying substrates and are critical for maintaining viability in adherent cell populations. Currently droplet assays that require long term incubation or cell culture, are limited to suspension cells due to the absence of a solid surface in standard water in oil emulsions on which cells can adhere. This platform extends the utility of droplet assays by providing a uniformly sized pocket for attachment and quantification of single cell signals (the space of the inner void or cavity 18), without limiting the total volume of media available to cells (the total droplet volume) as liquids and small molecules can easily diffuse through the solid gel support. Furthermore, a unique capability of dropicles 10 is the ability to control the dimensions of the internal void or cavity 18, both to serve as a sieve to limit the size of encapsulated cells (e.g., capturing leukocytes, red blood cells or bacteria from a background of large cells), to control the volume and number of cells that can be encapsulated, or to encapsulate and maintain both adherent and suspension cells concurrently. This type of co-culture proves difficult with current technologies such as probing interactions between pairs of cellular populations. For example, enabling detection and subsequent expansion of antigen specific T-cells towards patient-derived tumor cells.

### Cellular Attachment through FSL Modification

Biotinylated drop-carrier particles 12 can be used to bind to non-adherent cell types as well by either pretreating particles with 10-250 µg/mL of streptavidin while simultaneously modifying cells with biotin conjugated to free lipids or cholesterols, (commercially available as FSL-biotin, 1,2-distearoyl-sn-glycero-3-phosphoethanolamine-PEG-biotin (DSPE-PEG-Biotin), Cholesterol-PEG-biotin, 1,2-Dimyristoyl-sn-Glycero-3-Phosphoethanolamine - PEG- biotin (DMPE-PEG-biotin), etc.), or by modifying cells with biotinylated lipids and streptavidin prior to mixing with biotinylated particles 12. In preferred embodiments 10 - 100 µg/mL of biotinylated lipid are added to a suspension of 1 million cells in PBS and incubated for 60-90 minutes at 37 °C. Affinity and binding of non-adherent cells from an aqueous solution enables increased concentrations of cells encapsulated in dropicles 10 rather than in satellite droplets 28 which is critical for the analysis of highly dilute samples. Additionally, successful sorting of high performing members of cell populations using standard techniques such as flow cytometry (using flow cytometer 150) is more easily achieved in the aqueous phase and thus is highly reliant, both, on the ability to keep cells within drop-carrier particles 12 after breaking the water-in-oil emulsions, and on subsequent release of cells from drop-carrier particles 12 post sorting. Because, FSL-biotin is not permanently bound to the cell membrane it will degrade with time and eventually release the cell from its substrate. Degradable peptides can also be incorporated into the pegylated backbone during drop-carrier particle 12 formation, and can be cleaved upon completion of the assay by exposure to the appropriate protease enzyme. For example, the peptide Ac-GCRDGPQGIWGQDRCG-NH2 [SEQ ID NO: 2] can be used during drop-carrier particle 12 fabrication as a crosslinker due to the presence of two cysteine groups at its ends and imparts degradability due to a peptide sequence that is the substrate of matrix metalloproteinases.

### Separation of Cells by Selective Adhesion

Conjugation or covalent binding of modified antibodies to the surface of drop-carrier particles 12 is also easily achieved through co-incubation in aqueous solution. Surface conjugated antibodies enable selective binding of subsets of cellular populations based on expression of particular proteins on their surface. This enables capture and enrichment of single cells of interest directly through antibody interactions with surface antigens conserved across all cells in a population, or with rarer surface antigens to enrich a subset of cells within a large background of extraneous cells in a mixed population. Such enrichment is a critical feature in assays on many biological fluid samples where data from small subpopulations of interest is often confounded by noise stemming from measurements on off target cells. In embodiments where capture of all cells through a conserved protein marker is desired, biotinylated antibodies are usually pre-bound to cells in order to decorate all available surface moieties, while conserving reagents. Up to 10 million T cells have been decorated in 1 mL volume with 10 µg/mL of biotin-Anti-CD3 antibody and adhered to free streptavidin sites on drop-carrier particles 12. In other embodiments, in which capture of a select group of cells is required, drop-carrier particles 12 must be modified with antibody directly to eliminate adhesion of cells not containing the surface marker of interest. Due to the larger total surface area of drop-carrier particles 12 this requires a higher concentration of antibodies, e.g., 10-250 µg/mL per sample depending on antibody affinity for target antigen.

In one embodiment, the selective binding and accumulation of cells is achieved by incubating and actively mixing an aqueous solution containing drop-carrier particles 12 conjugated with antibodies with a mixed cell solution. Antibodies targeting a cell surface antigen (e.g., CD8, CD4) leads to selective enrichment of a cell type of interest (e.g., T-cell sub-populations). During mixing, target cells enter into the void or cavity 18 of the drop-carrier particle 12 and bind to antibodies and remain attached within the void or cavity region 18. Non-target cells can enter the void region but do not selectively adhere and therefore are dislodged by subsequent mixing of the solution. Target cells can also bind to the outer surface of the drop-carrier particles 12 however the shear during mixing of the solution can also dislodge these cells not maintained in the void or cavity region 18. In one embodiment, a concentrated suspension of T-lymphocytes (at least 10 million cells/mL) modified as described above with 10 µg/mL of biotin-anti-CD3 is added to a concentrated streptavidin modified drop-carrier particle pellet at a ratio of 5 cells/particle and pipetted at a rate of 2-4 repetitions per second for 2 minutes using a 100 µL, 200 µL, or 1000 µL pipette tips. Drop-carrier particles 12 are then filtered using a Fisherbrand 40 µm cell strainer and recovered, resulting in a drop-carrier particle 12 population highly enriched with cells attached within the central cavity 18. Adjustment of the average number of cells bound in the "pocket" 18 of the drop-carrier pocket 12 is possible by adjusting the initial cell to drop-carrier particle 12 ratio during seeding. Notably, the cavity or void region 18 can be sized (~10-20 microns) to only enable the entry and maintenance of a single cell, two cells, or a target number of cells on average. Adhered cells can then be encapsulated in an oil phase as described herein and in later sections to perform single-cell assays. Adhered cells could include mammalian cells, but alternatively can include bacteria, algal, fungal, or other cells or cell fragments, such as microvesicles or exosomes.

### Micro/nano object (Cell/bead/proteins/etc.) entrapment via crosslinkable dispersed phase

In a separate embodiment, a crosslinkable material can be added to the sample to be encapsulated as the dispersed phase 14 in dropicles 10. Gelation of the dispersed phase can be triggered prior to transferring of the drop-carrier particles 12 back into a water phase in order to bind or immobilize cells, beads, or other samples in their respective drop-carrier particle 12 for downstream analysis/sorting. In one example, the use of temperature sensitive gels (Agarose, gelatin, etc.) can be used to gel and encapsulate cells in a gel matrix prior to transfer to an aqueous phase (e.g., through cooling to 4 °C). The encapsulated cells can then be run through downstream analysis and sorting instruments (e.g., flow cytometry). In some embodiments, a reversible gelling material is used such that cells can then be released from the drop-carrier particle 12 and the gelled region via a temperature change to melt agarose (or other gel material), or the use of an enzyme, e.g., agarase, or a combination thereof.

In other embodiments UV or pH triggerable crosslinking mechanisms are used to initiate gelation and entrapment (radical polymerization, Thiol-ene, Michael addition, etc.). If necessary, reversible crosslinking can be performed using a reversible crosslinker. In some embodiments, crosslinkers with disulfide bonds can be broken down using reducing agents, using enzyme cleavable crosslinkers (e.g., through specific peptide sequences), or using crosslinking chemistry susceptible to hydrolysis by addition of base (e.g., molecules conjugated with cross-linking agents containing a sulfone bond, acrylamide, ester, thioester, etc.)

### Varying Porosity for Changes in Droplet Reactivity

The porosity of each drop-carrier particle 12 can also be manipulated during crosslinking either by incorporation of porogens, variation in the length of precursor chains, or via the addition of a secondary chemistry enabling partial degradation on demand. This control provides an extra layer of versatility, whereby drop-carrier particles 12 can be specifically designed based on the requirements for the specific assay. Drop-carrier particles 12 with smaller pores may be impermeable to proteins and other large bio-molecules, enabling more sensitive detection of such species, since the apparent volume for such assays will be the particle void space rather than the entire particle volume. In contrast, larger pore spacing will enable diffusion of larger bio-molecules and provides more sites for attachment before signal saturation, widening the quantifiable range.

### Use of Dropicles in Assays

Dropicles 10 can be rendered compatible with many widely used droplet or other digital assays that rely on compartmentalizing volumes. Through careful choices in material chemistry and particle design, dropicles 10 can be directly applied to many assay workflows, and can enhance the collected data through the enrichment of desired cell populations, or by providing a smaller apparent volume for analyte detection.

### Digital Nucleic Acid Amplification Assays

Nucleic acid amplification is used widely in biology for the identification and characterization of nucleic acid sequences in order to monitor gene expression, identify hereditary diseases, and validate appropriate transfection in genetic modification workflows. Polymerase chain reaction (PCR), the most well-known of these amplification schemes, has been adapted for use in droplets, and has even been commercialized by Bio-Rad for use as a digital assay. Droplet digital PCR (ddPCR) uses a microfluidic droplet generator to segment aqueous volumes containing nucleic acids, primers, dNTPs, fluorescent intercalating dyes, and DNA synthesis enzymes into nanoliter volume droplets. As the sample is thermocycled, target DNA is amplified, resulting in an increased fluorescent signal (e.g., due to an intercalating fluorescent dye) within droplets containing the target sequence that is easily distinguished from background fluorescence in droplets in which amplification did not proceed because of the lack of a target sequence. This technique has the added advantage of providing absolute quantitation of the concentration of a target sequence within a biological sample.

Digital nucleic acid amplification approaches (such as digital PCR, digital loop-mediated isothermal amplification (LAMP) or other isothermal amplification approaches) are easily translated to the dropicle 10 system, as the hydrogel particles can simply be reconstituted in the aqueous PCR or other amplification cocktail mixed with the sample containing target nucleic acid sequences (FIG. 13A). Subsequent sample emulsification via vortexing or pipetting enables distribution of target sequences and cocktail mix analogously to standard ddPCR approaches. The uniform volumes within dropicles 10 can then be thermocycled or heated to generate fluorescent signal when target is present to be analyzed for absolute quantification. Importantly, the presence of the drop-carrier particle 12 that is supporting the dropicle 10 can enhance the thermostability of the emulsion and reduce coalescence. Emulsification through this approach can produces a number of satellite droplets 28 as well. However, the relative ratio of these satellite droplets 28 to those filled with a particle can be tuned based off of the surfactants used, the degree of drying of the initial microgel sample (void fraction), and the sample volume compared to the available volume within drop-carrier particles mixed with the sample. Therefore, one can limit the total volume of sample encapsulated in empty satellite droplets 28, or calculate the fraction of total aqueous volume partitioned into dropicles 10, and apply a correction factor to quantify the number of target nucleic acid sequences present in the total volume. For example, encapsulation efficiency of targets can be approximated for a given initial concentration of drop-carrier particles 12, drop-carrier particle geometry (outer particle diameter, and inner cavity volume), and expected thickness of water layer surrounding the drop-carrier particle 12 after dropicle 10 formation (see FIGS. 11A-11C and associated text regarding encapsulation efficiency theory).

In a related embodiment, drop-carrier particles 12 can be precoated with primers and/or capture nucleic acid sequences specific for the target sequence (or sequences) to promote target nucleic acid binding to the drop-carrier particle 12 in the aqueous phase prior to emulsification. This would enable analyte concentration locally on drop-carrier particles 12 and eliminate amplification in satellite droplets 28 during thermocycling. By utilizing a large excess of the number of drop-carrier particles 12 to expected sample target sequences these systems will be operating in a digital counting regime, although at higher concentrations analog fluorescence signal in each droplet can also provide information on nucleic acid concentration. The absolute fluorescence value (not just an on-off threshold) can be used to back calculate the average number of bound sequences per dropicle 10 and yields an absolute value for the total number of target sequences in the sample. The ability to concentrate the target sequences on drop-carrier particles 12 and then perform downstream amplification and readout is a unique advantage of the dropicle system. In addition, the ability to capture nucleic acid sequences from a sample allows washing and replacement with a different solution (e.g., the nucleic acid amplification mix solution, see washing section above), enabling the ability to remove background contaminants from a sample solution which may interfere with the amplification reaction. Lastly, the dropicle approach has the added advantage that the digital assay becomes completely device free, providing users with no knowledge of microfluidics easy access to these assays that may otherwise be unobtainable or require large equipment and/or expertise.

Further modification of dropicles 10 enable them to, carry out even the most complex embodiments of digital PCR assays such as BEAMing (beads, emulsion, amplification, magnetics) digital PCR. In BEAMing, bio-fluid samples are again partitioned into droplets along with primer functionalized beads. When the target nucleic acid is present in a droplet with a bead, the nucleic acid is amplified by PCR leading to the attachment of amplicons to the primers on the encapsulated bead. The bead-attached amplicons can contain information about mutations in the target sequence. Note that not all droplets contain both target and one bead in previous implementations of BEAMing since the emulsification of beads is random, which is a shortcoming of the technique. Upon completion of amplification, the emulsion is broken and each bead is magnetically recovered and incubated with one or more types of fluorescently labeled nucleic acid reporter probes which are complementary to sequences containing different mutations. A particular mutation of interest amplified and attached to a bead will give rise a unique fluorescent signal on that bead. These fluorescently labeled beads can then be run through a flow cytometer 150 to characterize the prevalence of a mutation in a target sequence present in a sample.

An assay similar to BEAMing can be performed using dropicles 10, however, with additional advantages. In one embodiment the dropicle system acts to create more monodisperse emulsions for BEAMing and the opening size or volume of the cavity or void region 18 in a drop-carrier particle 12 is dimensioned to allow only a single bead to enter into each dropicle 10. In another preferred embodiment, the drop-carrier particle 12 itself is conjugated with primers and acts as the solid-phase bead in a BEAMing workflow. This has significant advantages in that each drop will have a single attached solid-phase (i.e., the drop-carrier particle 12). The drop-carrier particle 12 can then be re-suspended in an aqueous phase 14 for fluorescent probe binding and analysis in a flow cytometer 150. Each drop-carrier particle 12 can also be barcoded in a number of ways to provide unique indicia to the drop-carrier particle 12. For example, in one embodiment, the drop-carrier particle may contain separate primers/nucleic acid capture sequences associated with each barcode that target different sequences to enable multiplexing of the nucleic acid detection assay. Primers on one or both side of a target sequence can be immobilized on the drop-carrier particle 12 to also create attached target nucleic acid sequences.

As noted herein, one can also magnetically separate dropicles 10 from a background of satellite droplets 28 by covalently linking or embedding magnetic nanoparticles within the drop-carrier particle 12. In the presence of an externally applied magnetic field drop-carrier particles 12 can be accumulated or moved and washed. By manufacturing magnetic drop-carrier particles 12 below the critical size cutoff for standard flow cytometry (<50 micrometers) one can quantify mutational heterogeneity in the sample, directly from the fluorescence signal above a threshold associated with each drop-carrier particle 12.

In a related embodiment, amplified nucleic acid sequences can also be trapped on a drop-carrier particle 12 for analysis by including a pre-gel solution in the aqueous phase and gelling of the aqueous dispersed phase after amplification to prevent the loss of amplicons once returning the drop-carrier particle 12 to an aqueous phase. This approach is more preferred for the case of long amplicons (e.g., those produced using a LAMP reaction).

In another embodiment a drop-carrier particle 12 with a fully-enclosed cavity 18 is used. The particle matrix porosity can be tuned such that DNA target and reaction mixture can diffuse through the matrix. After dropicle 10 formation and amplification, amplified products that are too large to diffuse through the particle matrix can be retained. This is beneficial in that drop-carrier particles 12 can be transferred back into an aqueous phase for downstream analysis and quantification (e.g., flow cytometer) without loss of the amplified signal which remains retained within the fully-enclosed cavity.

Barcoding of drop-carrier particles 12 can be used to simultaneously capture and analyze different target nucleic acid sequences in a mixed sample. A mixture of separate types of barcoded drop-carrier particles 12 with separate nucleic acid capture reagents can be introduced into a sample to collect separate targets. The signal for a particular drop-carrier particle 12 can be linked to the barcode for that drop-carrier particle 12 to identify the target type and when analyzing a plurality of drop-carrier particles 12 a multiplex assay can be performed. Approaches to barcode drop-carrier particles 12 are described further herein.

### Digital ELISA

Digital ELISA is a conceptually similar technique to ddPCR which is used to quantify low concentrations of proteins or other analytes within small volume aqueous partitions using a sandwich immuno-recognition reaction. To perform digital ELISA in dropicles 10, capture antibodies specific to the target protein or other analyte are first conjugated to the drop-carrier particle 12 surface (see FIG. 13B). Antibody coated drop-carrier particles 12 are then placed in a solution containing the target analyte such that the number of drop-carrier particles 12 is in large excess to the number of analytes and incubated to allow complete binding. Following binding the sample solution is washed and replaced with a wash solution. Upon completion of this initial binding reaction and washing step a secondary antibody with affinity to a second region of the target analyte and containing a signal amplification component is added to the solution and allowed to bind to analytes associated with drop-carrier particles 12. Excess secondary antibody is again washed from the drop-carrier particles 12 using techniques described herein and the solution is replaced with a signal development solution which contains a substrate that reacts with the amplification component of the antibody to generate signal (fluorescent, colorimetric, pH change). Examples of signal amplification components include enzymes such as horseradish peroxidase (HRP), β-galactosidase, esterases, etc. Examples of substrates include Fluorescein di-β-D-galactopyranoside (FDG) or other fluorogenic substrates of β-galactosidase, as well as fluorogenic substrates of HRP such as Amplex Red, QuantaRed, QuantaBlu, etc. Immediately following the addition of the signal development solution drop-carrier particles 12 are emulsified in an oil phase 16 to form dropicles 10 and the entire sample is incubated to accumulate fluorescent or other signal with the dropicles 10. Following signal development, dropicles 10 can be placed in a large reservoir where all dropicles 10 can be imaged concurrently using microscopy or wide-field low cost imagers, and quantified to determine the fraction of dropicles 10 with high signal relative to the total number of dropicles 10. As specified earlier, this allows computation of the expected concentration of analyte in the sample. Moreover, after analyte is bound to the drop-carrier particles 12, which are washed and resuspended in the ELISA process, and the sample is emulsified, all satellite droplets 28 will be free of signal generating elements and can be discarded without issue. In another embodiment, tyramide can be used to link the surface of the drop-carrier particle 12 itself as the product of HRP enzymatic turnover allowing for amplified local signals to be captured on the drop-carrier particle 12. These signals, such as a fluorescent signal can then provide a direct measure of whether analyte was bound on each drop-carrier particle 12 using downstream techniques such as flow cytometry (using a flow cytometer 150) after dropicle 10 emulsions are broken. In one embodiment Alexa Fluor^{™} 488-tyramide is used as the substrate which is activated by HRP acting as an amplification component on the secondary antibody and the activated fluorescent tyramide conjugate covalently binds to nearby proteins, peptides, or other phenol groups incorporated on or in the drop-carrier particle 12. In a related embodiment, biotin-tyramide is used as the substrate leading to amplification of signal by covalent linking of multiple biotin molecules to the drop-carrier particle 12. Biotin can then be labeled in a number of ways fluorescently using streptavidin conjugated fluorophores.

As for nucleic acid analysis, barcoding of drop-carrier particles 12 can be used to simultaneously capture and analyze different target analytes in a mixed sample. A mixture of separate types of barcoded drop-carrier particles 12 with separate antibody capture reagents can be introduced into a sample to collect separate targets. The signal for a particular drop-carrier particle 12 can be linked to the barcode for that drop-carrier particle 12 because they are co-located. This enables analyzing target types for a plurality of drop-carrier particles 12 to perform a multiplex assay for a number of proteins/analytes. Approaches to barcode drop-carrier particles 12 are described further herein.

### Single Cell Sequencing

The push for increased resolution in cellular gene expression measurements combined with the reduction in cost of the aforementioned sequencing approaches has fostered an interest in droplet mediated single cell sequencing of RNA and DNA. In single-cell RNA sequencing approaches, individual cells are co-encapsulated with a barcoded bead that is able to capture mRNA with bound poly-T capture nucleic acids that also contain a unique cellular barcode and molecular identifier. These barcoded capture nucleic acids also act as primers for reverse transcription. Cells are lysed in droplets, mRNA is released and binds to the poly-T capture nucleic acids on the barcoded bead. The emulsion is then broken and the captured RNA on each bead is reverse transcribed. The pooled cDNA contains barcodes from each individual cell to obtain unique gene expression reads that correspond to that cell member of the population. When there is a single barcoding bead and cell in each droplet this process attributes a unique molecular signature to reads from each individual cell and allows pooling and bulk gene sequencing and other analysis of signatures while maintaining sample differentiation. Several popular variations of these approaches available both commercially and open source include Drop-Seq, InDrop, and CytoSeq.

Single cell nucleic acid sequencing is adapted using the dropicle system with the notable advantage of being device-free, again enabling quantification of gene expression from unique cells without the need for complex microfluidic devices or instruments for the end user. In one embodiment using dropicles 10 for single-cell RNA sequencing, the cavity or void region 18 of the drop-carrier particles 12 is dimensioned to hold a single cell and prevent more than one cell from entering. Drop-carrier particles 12 are further functionalized to contain mRNA capture moieties on their surface which are uniquely barcoded as described herein. Drop-carrier particles 12 may optionally also be functionalized to contain adhesion ligands or antibodies for cells as described herein to enable selective cell isolation prior to single-cell RNA-sequencing. Lytic reagents can also be incorporated in the matrix of the drop-carrier particle 12 prior to cell encapsulation and formation of a dropicle 10 emulsion. The lytic reagent can be released slowly to lyse captured cells or triggered to be released or activated as discussed further below. Alternatively, lytic reagent can be added by mixing of dropicles 10 with additional drops containing lytic agent which interact with dropicles 10 without dislodging adhered cells. Bulk emulsification of dropicles 10 in the presence of cells can encapsulate millions of single cells on a timescale of minutes, rather than hours to days as required by a single microfluidic device. In another embodiment a lytic agent that is miscible in both the oil 16 and water phase 14 can be used. For this case, after the formation of the dropicle 10 the lytic agent can be added to oil 16 and some fraction will partition into the dropicle 10 to cause cell lysis. In another embodiment an inactive lytic reagent can be added into the dispersed phase, and then after dropicle formation, or right before dropicle formation, can be activated by an external stimuli. For example, ionic surfactants such as sarkosyl are active in certain pH ranges. In this example the pH of the solution can be lowered to keep sarkosyl inactivated, and then after dropicle formation can be activated by increasing pH through proton acceptors (e.g., triethylamine) dissolved in the oil phase that then partition into the aqueous phase of the dropicle 10.

Furthermore, the standard methods to barcode nucleic acid capture sequences on microparticles in the existing methods are through split and pool synthesis, where microparticles are split into four different solutions each containing one nucleotide, collected, and randomly divided once more a total of n times to form random oligomers of length n. This type of addition can be done directly on the drop-carrier particles 12 used to make dropicles 10, obviating the need for a second solid phase and limiting DNA amplification solely to droplets containing functionalized particles. That is, using dropicles 10 can provide a significant advantage by overcoming the stochastic process of bead and cell loading which is wasteful of both beads and cells. Drops with a single-cell but no beads lead to no signal, and drops with a bead without cell also lead to no signal. Dropicles 10 contain a single bead (the drop-carrier particle 12) and the void region can be dimensioned to isolate a single-cell.

### Controlled release of molecules/reagents from drop-carrier matrix

In some embodiments, reagents are trapped within the matrix of the drop-carrier particle 12 are released over time. For example, lytic reagents (i.e., surfactants, detergents, and/or enzymes) can be stored in dried drop-carrier particles 12. Upon hydration, lytic reagents are slowly released to lyse cells encapsulated in dropicles 10. In another embodiment, lytic reagent is incubated in the drop-carrier matrix material until near saturation, dispersed phase is exchanged with non-lytic fluid containing cells to be encapsulated, and dropicles 10 are formed. The lytic reagent stored in the drop-carrier matrix is released slowly by diffusion to lyse encapsulated cells. The hydrogel matrix porosity of the drop-carrier particle 12 can be adjusted, as described herein, to tune the time course of reagent release, with increased porosity leading to more rapid release and reduced porosity leading to prolonged release.

In other embodiments, the matrix of the drop-carrier particle 12 is formed from a material that swells upon a change in environmental conditions (e.g., pH, temperature, light, etc.), enabling triggered release of encapsulated reagents stored in the matrix. For example, light triggered degradation of o-nitrophenyl containing backbone polymers in the drop-carrier particle 12 matrix can lead to decreased crosslinking density, swelling of the drop-carrier matrix and reagent release. In another embodiment, the matrix of the drop-carrier particle 12 is charged and oppositely charged reagents are associated via charge-charge interactions. Release of the charged reagents can be induced by a change in pH which changes the charge of the reagent, the drop-carrier particle 12, or both. In one embodiment the pH can be tuned externally through the addition of organic acids/bases in the oil phase (e.g., acetic acid, triethylamine). In other embodiments, the aforementioned approaches may be used to release drugs/molecules over a range of time periods to probe cell response.

### Cell Viability During Encapsulation

Several assays require the maintenance of cellular viability even after single cell measurements. For example, in order to sort out high performers for production of valuable bio-products, or for selection of cells with optimal phenotype to treat certain diseases. These assays can also be carried out in the dropicle 10 emulsion systems by using oils and surfactants known to be highly cytocompatible. In a preferred embodiment, a fluorocarbon continuous phase containing a non-ionic cytocompatible surfactant is used. To demonstrate this, Jurkat cells stained with both Hoechst and calcein were mixed, with dried PEG microgel drop-carrier particles 12 manufactured as described herein and emulsified via pipetting in Novec^{™} 7500 with 0.5% Pico-Surf^{™}. Upon emulsification dropicles 10 were placed on a microscope slide and imaged in brightfield, DAPI, and FITC channels via fluorescent microscopy to determine viability (see FIGS. 14A-14C). The vast majority of cells emulsified in dropicles 10 stained positive for calcein both pre and post emulsification, indicating compatibility with the proposed encapsulation approaches.

In another example, Chinese Hamster Ovary (CHO) cells were encapsulated in dropicles 10 in media, with Novec^{™} 7500 and 2% v/v Pico-Surf^{™} used as the oil phase. Cells were retrieved at various time points using 20% v/v PFO in Novec^{™} and stained with Calcein AM as a live stain and propidium iodide as a dead stain. It was found that cells maintained high viability through this process and for over 24 hours (>80% viability).

### Single-Cell Secretion Isolation

Cell populations that are traditionally considered homogeneous may in fact exhibit a tremendous heterogeneity in phenotype which is simply masked by limited resolution in many common assays. In order to glean useful metrics of cellular population dynamics these assays must be carried out at the single cell level. For example, large scale immunological responses to perturbations of the local microenvironment *in vivo* are orchestrated through secretion of signaling molecules between leukocytes. If one simply probes the body fluid in bulk to determine protein composition in this scenario, a total sample concentration will be obtained, however no information can be gleaned with regard to which subpopulations are secreting, limiting the degree to which such coordinated responses can be understood.

With dropicles 10 numerous schemes can be applied to capture, quantify, and sort cells based off secreted protein signals. FIG. 16 illustrates one example of an illustrative workflow for performing secretion capture and analysis using dropicles 10. Cells can be bound to the surface of the drop-carrier particle 12 as described above using either biotinylated lipids, RGD, and/or surface marker specific antibodies depending on the desired makeup of the encapsulated cell populations. To capture secretions, capture reagents (e.g., antibodies targeting secreted molecules) as discussed above for ELISA systems can be immobilized on and/or in the matrix of the drop-carrier particle 12. Once encapsulated, cells are incubated while secreted proteins accumulate on the surface of the particle bound to capture reagents. Secondary reporter antibodies, for example with attached fluorophores, which are also present in the emulsified solution, or can be introduced once breaking the emulsion will bind with captured proteins. Localization of signal onto the drop-carrier particle 12 itself can enable sorting through standard flow cytometry/FACS systems 150 after breaking emulsions and reconstituting drop-carrier particles 12 into the aqueous phase. Furthermore, reversible binding of cells to the particle surface, e.g., through biotinylated lipid modification, enables cells to be sorted along with the drop-carrier particle 12, resulting in not only quantitative secretion analysis at the single-cell level, but also sorting out particular cells with desired phenotypes.

### General Workflow

### (1) Loading cells on the drop-carrier particles 12 in an aqueous solution.

In one example embodiment, drop-carrier particles 12 are first loaded, e.g., by pipetting, into a well plate, well, flask, or other vessel with a flat bottom surface (See FIG. 16 - Particle Seeding and Cell Loading). Due to the asymmetry of the drop-carrier particle 12 shape in some embodiments, drop-carrier particles 12 settle with their cavities in an upright orientation (e.g., the cavity 18 opens to the surface opposite the direction of acceleration due to gravity). This is advantageous in that the open cavity 18 can then be seeded with cells. The amount of drop-carrier particles 12 to seed can be approximated for a given particle diameter and well surface area by assuming closed packing of spheres. For example, for a particle 12 diameter of 85 microns and a twelve well plate (surface area 2 cm² per well) it was found that 30 microliters of concentrated particles 12 covered a large fraction of the bottom of the well surface.

After drop-carrier particles 12 settle (typically 5-10 mins), cells can then be carefully seeded into the wells (e.g., using a pipette) and allowed to settle, with a fraction of the cells settling in the cavities 18 of the drop-carrier particles 12. The fraction of cells that fall into the cavities 18 vs external to the cavities 18 can be increased by increasing the ratio of the cavity opening width to the drop-carrier particle diameter. In general, the fraction of drop-carrier particles 12 containing a given number of cells (i.e., 0, 1, 2, 3, 4, 5, 6, 7, 8, 9, 10, or more cells) can be calculated from Poisson statistics, and can be controlled by adjusting the cell density during seeding stages. In one example experiment, 15 microliters of concentrated drop-carrier particles 12 (85 micron outer diameter, 50 micron inner diameter) were seeded in each well of a twenty-four well plate. Various amounts of cells were added to different wells and allowed to settle into the drop-carrier particles 12. Cells and particles 12 were imaged to determine the number of cells per particle 12. Addition of 10,000 cells per well resulted in Poisson loading of approximately 0.09 cells per particle 12. More specifically, 93.1% of particles 12 were empty, 6.65% contained one (1) cell, and 0.25% contained two (2) or more cells. Of particles 12 with cells, 96% contained only one cell. Addition of 30,000 cells per well resulted in Poisson loading of approximately 0.2 cells per particle 12. More specifically, 82.2% of particles 12 were empty, 15.9% contained one (1) cell, and 1.9% contained two (2) or more cells. Of particles 12 with cells, 89% contained only one cell. Addition of 100,000 cells per well resulted in Poisson loading of approximately 0.8 cells per particle 12. More specifically, 42.6% of particles 12 were empty, 32.6% contained one (1) cell, and 24.8% contained two (2) or more cells. Of particles 12 with cells, 56.8% contained only one cell.

Different cell seeding amounts are ideal for different applications. For embodiments in which capturing no more than one cell per particle 12 is critical for assay validity, lower seeding densities are ideal (e.g., 10,000 cells per twenty-four well plate well (surface area of 2 cm²)). In contrast, for embodiments in which multiple cells per particle 12 are desirable, such as for evaluation of cell-cell interactions a higher seeding density is preferred (e.g., 100,000 cells per twenty-four well plate well (surface area of 2 cm²) in which 15 µl of concentrated drop-carrier particles 12 were seeded in each well). In other embodiments, where loss of cells is detrimental and should be limited, multiple layers of drop-carrier particles 12 can be arrayed such that cells that do not settle into the cavities 18 of the first layer of drop-carrier particles 12 can settle into cavities 18 in second or subsequent layers of drop-carrier particles 12.

A second method of associating cells with drop-carrier particles 12 leverages the difference in shear forces experienced by cells bound within sheltered drop-carrier particle cavities 18 versus those bound on outer surfaces of drop-carrier particles 12. In brief, a concentrated suspension of cells with affinity to the surface of the drop-carrier particle 12 (e.g., through adhesive ligands) can be mixed into a concentrated suspension of drop-carrier particles 12 and agitated vigorously, at 2-4 pipette repetitions per second 50-100x, using a 100 µL, 200 µL, or 1 mL pipette. Cells will distribute throughout the suspension and rapidly adhere to the surfaces of the drop-carrier particles 12. Those that bind to the exterior of the drop-carrier particle 12 will be sheared off rapidly and return back into suspension, whereas cells which become entrapped within the void or cavity 18 are more sheltered from much of the external fluid shearing force, leaving them adhered to the surface of the pocket formed by the void or cavity 18 of the drop-carrier particle 12. Once particle suspensions have been sufficiently agitated, they can be filtered as described below. This offers a method to rapidly enrich the fraction of cells found within the drop-carrier particle cavity 18.

Modification of the surfaces of drop-carrier particles 12 enables adhesion and subsequent culture of seeded cells within drop-carrier particle cavities 18. For example, commonly used integrin binding peptides, such as RGD, incorporated into the surface of the drop-carrier particle 12 enables adhesion of cells for example based on the presence of integrins, maintaining the attachment of cells to the drop-carrier particles 12 even in the presence of vigorous mechanical agitation from pipetting, centrifugation, and flow sorting procedures. In a preferred embodiment, RGD is added at a concentration of at least 4 mg/mL in the dextran phase during drop-carrier particle 12 manufacture. In this approach, radicals generated from photoinitiators in the PEG phase induce covalent bonding between free thiols on peptide cysteine groups and unbound norbornenes on the polymer backbone of the drop-carrier particle 12 precursor. CHO cells seeded on such RGD-modified drop-carrier particles 12 remained associated and spread on the surface of the drop-carrier particle 12 for several days.

Cell lines which are typically non-adherent can also be associated with surfaces of the drop-carrier particle 12. In one embodiment, biotin-streptavidin interactions are used to link cells to drop-carrier particles 12. More specifically, biotinylated drop-carrier particles 12 are pre-modified with streptavidin and target cells are pre-modified with either biotinylated lipids/cholesterols or biotinylated antibodies generating affinity between drop-carrier particles 12 and cell populations or subsets of cell populations. In one preferred workflow, primary T-cells can be bound to biotinylated drop-carrier particles 12 by first pre-modifying biotinylated drop-carrier particles 12 with 10 µg/mL of streptavidin in PBS. Concurrently T-cells are modified by mixing 10 µg/mL of biotin-anti-CD3 antibody to fewer than 10 million cells, and incubated at 37 °C for 20 minutes. Both drop-carrier particles 12 and cells are washed several times with PBS to ensure removal of unbound materials. Drop-carrier particles 12 are then spun down for 5 minutes at 2000 G to form a tight pellet to which a concentrated anti-CD3 modified cell suspension is added. The cell and suspension of drop-carrier particles 12 is then continuously agitated by manually pipetting for at least 2 minutes. The sample is then filtered using a cell strainer, as described below, to collect only drop-carrier particles 12 and any cells that were bound to their surface. An alternative embodiment using biotinylated lipids proceeds in much the same way, with the important caveat that any cell can be modified using this approach, regardless of surface protein composition. Here, cells are incubated at 37 °C with 10-100 µg/mL of biotinylated lipids for a total period of 60-90 minutes before washing and attaching to drop-carrier particles 12 by pipetting.

(2) Washing away unbound cells and/or background secretions and adding an affinity reagent to bind to the drop-carrier particles 12 that captures a specific cell secretion of interest.

In certain applications, cells that remain unassociated with drop-carrier particles 12 are undesirable and may even become a source of noise. In order to reduce background, drop-carrier particles 12 can be washed prior to formation of dropicles 10, eliminating unbound cells from the solution before assays are conducted. In one approach, the suspension of drop-carrier particles 12, drop-carrier particles 12 with attached cells, and unassociated cells are added to a cell strainer with a mesh size larger than the cell diameter but smaller than the drop-carrier particle 12 diameter. This allows drop-carrier particles 12 with attached cells to be retained by the mesh, while unassociated cells pass through. While the drop-carrier particles 12 are retained, they can be continuously washed by sequential additions of buffer, eliminating any cells not tightly adhered to the surface of the drop-carrier particles 12. Drop-carrier particles 12 and their associated cells are subsequently isolated through simple inversion of the cell strainer, addition of buffer from the underside of the mesh, and collection of the resulting solution containing buffer and eluted drop-carrier particles 12 with attached cells. One preferred cell strainer for this application is the Fisherbrand 40 µm sterile cell strainer from Fisher Scientific.

In applications with rare cells, it may be desired to recover any cells not associated with the drop-carrier particle cavities 18. In this case, the above strategy can be used, with cells not associated with drop-carrier particles 12 collected for later seeding into a new sample of drop-carrier particles 12.

In some applications it is desired to capture secretions onto drop-carrier particles 12. In such embodiments it is beneficial to modify the surface of drop-carrier particles 12 with an affinity reagent such as an antibody or immunoglobulin binding proteins to act as a molecular capture site for secretions (FIG. 16 - Secretion Capture and Sorting). In exemplary embodiments in which the rate of secretion is slow and the binding of cells to drop-carrier particles 12 is rapid, as in biotin-streptavidin reactions, drop-carrier particles 12 can be pre-modified with molecular capture sites internal or on the surface of the drop-carrier particle 12 and rapidly partitioned into dropicles 10 without contaminating signals stemming from the associated cells. In other embodiments, where secretion rates are rapid and cells may take several hours to strongly adhere to the surfaces of drop-carrier particles 12, as in the case where adherent cells (e.g., CHO cells) are adhered to an RGD binding peptide, cells are first allowed to adhere to surfaces of the drop-carrier particles 12, preferably for between 2-12 hours. Once cells have attached to the drop-carrier particles 12, samples can be washed via centrifugation and solution exchange to remove background secretions and unbound cells. Drop-carrier particles 12 can then be modified with affinity reagents such as biotinylated protein A or biotinylated antibodies that bind to secretions of interest to form molecular capture sites attached to the drop-carrier particles 12, and then quickly emulsified into dropicles 10. A detailed protocol is disclosed herein. In one preferred embodiment, drop-carrier particles 12 are functionalized with both RGD peptides and biotin groups by incorporating both 4 mg/mL RGD in the dextran phase of the drop-carrier particle precursor and 0.5-5 mg/mL biotin-PEG-thiol in the PEG phase of the drop-carrier particle precursor during manufacture as described in the detailed description for FIG. 12. Cells are seeded on these peptide and biotin modified drop-carrier particles 12. After attachment, each drop-carrier particle 12 sample (30 µL of drop-carrier particles 12 in a twelve well plate) is treated with 0.02 mg/mL streptavidin in PBS, which binds to biotin groups on surfaces of the drop-carrier particle 12. Samples are incubated for 10 minutes, and washed several times with PBS with 0.5% BSA. Next, each concentrated drop-carrier particle 12 sample is modified with 10 µL of a 0.5 mg/mL stock of biotinylated-protein A and incubated for ten minutes, as described above. After appropriate modification, drop-carrier particles 12 can be directly applied for secretion measurement applications and can be emulsified as described below.

(3) Emulsifying the drop-carrier particles 12 with attached cells and bound affinity reagent in an oil continuous phase to form dropicles 10.

The optimal formation and maintenance of dropicles 10 is dependent on several factors including the type and concentration of surfactant used, and the method of agitation. In one exemplary embodiment, 2% Pico-Surf^{™} (Sphere Fluidics) in Novec^{™} 7500 engineered fluid as the continuous phase was used, with drop-carrier particles 12 in PBS or cell culture media as the dispersed phase in a 2:1 volume ratio respectively. Under these circumstances it was found that vigorous agitation via manual pipetting (2-4 pipette repetitions per second 50-100X using a 100 µL, 200 µL or 1 mL pipette) reliably and reproducibly forms monodisperse dropicles 10 with a high fraction containing only a single drop-carrier particle 12.

(4) Incubating the dropicles 10 for a time period to accumulate secretions that bind with the affinity reagent.

In order to preserve cell viability during incubation, dropicles 10 were formed using both cell culture media (RPMI-1640/DMEM, etc.), and PBS enriched with 2% FBS. As most small molecules can readily diffuse through the pores of hydrogel drop-carrier particles 12, the entire dropicle 10 volume serves as a nutrient reservoir. Additionally, dropicles 12 can be maintained at around 37 °C within a standard cell incubator. It was found that adding a layer of light or heavy mineral oil on top of the dropicle 10 layer improves the stability by reducing evaporation and coalescence.

All analytes produced by single cells encapsulated within dropicles 10 are retained within their associated aqueous phase volumes or compartments. The relatively small volume of these dropicles 10 leads to local accumulation of secreted signals which aids the rapid binding of detectable amounts of secretion on the surfaces of drop-carrier particles 12. Depending on expected secretion levels, incubation times can be adjusted depending on cell type and secretion targets of interest. For example, if low levels of secretions are expected longer incubation times can be used (>12 hours); in the case of high secretion rates shorter incubation times can be used (~2-3 hours).

Depending on the expected secretion levels, the number of secretion binding sites and or spatial location of binding sites can be adjusted. In one example, available binding sites can be increased by fabricating drop-carrier particles 12 with a matrix porosity with pore sizes that allow secretions to freely diffuse through the gel matrix. In this embodiment, the full 3D geometry of the drop-carrier particle 12 can be used to capture secreted molecules, increasing the total number of binding sites, which is beneficial for high secretion levels as binding sites are not easily saturated enabling better dynamic range of detection. In some cases, e.g. low secretion levels, it is advantageous to spatially localize the binding sites in order to create a more concentrated signal. For example, by using solid drop-carrier particles 12, or particles with porosity such that secretions cannot freely diffuse through the matrix of the drop-carrier particle 12, accessible binding sites are localized to the surface of the drop-carrier particles 12. In further embodiments, binding sites can be localized to the surface of the inner cavity or void 18 to further localize the secretion capture and resulting signal. In the detailed example description of CHO cells secreting anti-IL8 antibodies described herein, the drop-carrier particle pore size is small enough to prevent free diffusion of the target secretion, anti-IL-8. This causes secreted anti-IL-8 to bind to the exterior of the drop-carrier particle 12 (i.e., within the cavity 18 as well as on the periphery of the outer edge), and strengthens the visibility of the accumulated fluorescent signal.

(5) Breaking the dropicle 10 emulsion to return the drop-carrier particles 12 with attached cells into an aqueous solution.

Once dropicles 10 have been incubated long enough for sufficient secretions to have accumulated and bind on the drop-carrier particles 12 for visualization, the emulsions are destabilized to retrieve drop-carrier particles 12 and their associated cells. This is accomplished through the addition of secondary surfactants such as perfluorooctanol (PFO) or Pico-Break^{™}. In one embodiment, all excess oil is removed from the dropicle 10 emulsion and it is replaced by an equal volume of 20% PFO in Novec^{™}-7500 oil. The solution is weakly agitated by gentle tapping on the tube surface as the droplets destabilize, after ~2 minutes a clear boundary is visible between the aqueous and organic phases. Any remaining small organic satellite droplets 28 can be removed from the aqueous phase through a rapid ~5 second centrifugation at low speeds (-100 g). The aqueous solution and drop-carrier particles 12 are then readily removed from the dissociated oil phase (e.g. by pipetting) prior to downstream analysis.

(6) Staining the drop-carrier particles 12 with attached cells for captured secretions using a second affinity reagent specific to the secretion.

Several different reporting schemes can be used to analyze the secreted molecules bound to drop-carrier particles 12. In one preferred embodiment a secondary antibody conjugated to a fluorophore which is specific against a second epitope on the secreted molecule can be added to form a fluorescent sandwich immunocomplex, reporting the presence of the bound secreted molecule. This method enables quantification through many commonly used analytical tools such as flow cytometers 150 (illustrated in FIGS. 13A, 13B, 16, and 18), plate readers, and fluorescent microscopes.

For secreted molecules present in particularly low concentrations, amplification schemes wherein reporter antibodies are conjugated to enzymes such as horseradish peroxidase and cleave fluorescent dyes that bind to free sites on particles can amplify signal, as described herein, such as through the use of tyramide chemistry. In a related embodiment, magnetic nanoparticles or magnetic microparticles can be used to label captured secreted molecules of interest. The addition of magnetic properties can be used in numerous ways. For example, to enrich drop-carrier particles 12 of interest or to sort samples of interest using magnetic forces. It should be appreciated that staining is not limited to these two modalities (e.g., fluorescence and magnetic) and can include a combination of multiple modalities. Other modalities could include colorimetric, phosphorescence, light scattering particles, plasmonic nanoparticles, among others known in the art.

(7) Analyzing (e.g., with a flow cytometer 150) the stained drop-carrier particles 12 with attached cells and optionally sorting cells of interest attached to the drop-carrier particles 12 based on a threshold of intensity based on staining corresponding to secretion amount/affinity.

Once stained, drop-carrier particles 12 and their associated cells can be analyzed, and also sorted, in high throughput using commercially available flow sorters 150 (illustrated in FIGS. 13A, 13B, 16, and 18). In preferred embodiments, drop-carrier particles 12 are suspended within nutrient enriched PBS such as PBS + 2% FBS to preserve cell viability over the sorting process. The relative size of drop-carrier particles 12 enables clear distinction of particles from contaminating dust, cell debris, or small diameter oil droplets in the solution during sorting allowing easy identification using forward scatter and side scatter signals. Adhered cells stained with cytoplasmic tracking dyes, nuclear stains, viability stains, or reporter antibodies are also easily detected on drop-carrier particles 12, enabling direct analysis of cell containing drop-carrier particles 12. Lastly, reporter antibodies added to the surfaces of drop-carrier particles 12 upon disruption of emulsions allows direct quantification of relative protein production from individual cell clones within particle cavities 18 from the relative fluorescence intensity of the drop-carrier particle 12 surface. Sorted cells of interest, for example clones secreting high levels of a desired protein are readily isolated and remain viable for subsequent expansions, enabling enrichment of beneficial cell phenotypes.

In other examples screening of single cells based on total secretion can be performed over multiple cycles to improve selection of desired subpopulations. This general workflow is illustrated in FIG. 19. Following previously mentioned approaches, single cells can be isolated into drop-carrier particles 12, emulsified into dropicles 10 where secretions accumulate without crosstalk and are captured onto drop-carrier particles 12. The drop-carrier particles 12 can then be transferred back into water, stained to indicate the quantity of secretions, and analyzed/sorted along with the attached cells. Sorted sub-populations of cells can then be expanded to perform repeated selection steps. In one embodiment, sorted cells attached to drop-carrier particles 12 can be seeded into a well plate or flask and directly expanded from the drop-carrier particles 12. For example, after several days of culture it was found that CHO cells expanded across the surface of the drop-carrier particle 12 eventually expanding on the surface of the well plate they were seeded in. This has the advantage of reducing processing steps and limiting trypsinization of cells. If desired, adherent cells can be removed from the drop-carrier particles 12 using standard trypsinization and passaging steps. After expansion of cells, the single cell secretion and sorting cycle can be performed again by seeding recovered cells on drop-carrier particles 12 again and repeating the previously outlined steps. In a related embodiment, single cells seeded in the drop-carrier particles 12 can be grown to create a clonal colony attached to a drop-carrier particle 12 prior to emulsification. This enables the combined analysis/sorting based on growth and secretion of a clone. For example, cells can be seeded into drop-carrier particles 12 at a concentration such that most contain only a single cell. If desired, an initial population can be screened to remove drop-carrier particles 12 with multiple cells (e.g., using flow-sorter 150). After seeding cells can be expanded directly on the drop-carrier particles 12 such that a single cell colony is formed. This can be done over various times (e.g., <24 hours, 24 hours - 1 week, > 1week) depending on the application. After colony formation, background signal can be washed away and drop-carrier particles 12 can be modified with secretion binding sites. A secretion screen is then performed as previously outlined for single cells. The dropicle 10 system is uniquely suited to this workflow as cells can be grown on drop-carrier particles 12 prior to encapsulation, giving the opportunity to remove any unwanted background signal that accumulates during cell growth. In other approaches where single cells are encapsulated immediately and expanded, signal is accumulated during the entire growth period which may be undesired or lead to saturation of signal.

### Example Workflow

An example workflow for selecting out high secreting CHO cells is detailed as follows. The example cell-line used is CHO-DP12 clone #1934 (ATCC). Cell media was prepared as specified by ATCC. The CHO-DP12 cell line produces human anti-IL-8 antibodies which is the targeted secretion for this example experiment.
(1) loading cells to attach to the drop-carrier particles 12 in an aqueous solution.
   In this example, drop-carrier particles 12 with an outer diameter of 82.5 microns, inner diameter of 50 microns were used. Drop-carrier particles 12 were modified with 0.5 mg/ml of biotin-PEG-thiol (5000 MW, nanocs) and 4 mg/ml of RGD (added to dextran phase during fabrication as previously described). 30 µL of concentrated drop-carrier particles 12 were diluted with 1 mL of cell media and added into one well of a 12 well plate. Drop-carrier particles 12 were then allowed to settle for 10 min. CHO DP-12 cells were concentrated to 4 million cells per ml. For a target encapsulation of ∼ 0.3 cells per particle 18 µL of concentrated cell stock was taken and diluted to 50 µL with media, and then carefully transferred into the well pre-seeded with drop-carrier particles 12. For a target encapsulation of -0.1 cells per particle, 6 µL of concentrated cell stock was diluted to 50 µL and then carefully transferred into the well pre-seeded with drop-carrier particles 12. Cells were allowed to seed for 10 min before moving the well plate into an incubator. It was found that a range of 4-12 hours was needed for cells to attach strongly to the drop-carrier particles 12.
(2) washing away unbound cells and/or background secretions and adding an affinity reagent to bind to the drop-carrier particles 12 that captures a specific cell secretion of interest.
   After cells were incubated for a sufficient amount of time to attach to the drop-carrier particles 12, drop-carrier particles 12 were transferred from the well plate to a 15 mL conical tube. This was done by tilting the well plate at approximately a 30° angle and pipetting excess media from the top down to shear off drop-carrier particles 12 sticking to the surface, and pipetting the dislodged drop-carrier particles 12 and associated cells to the 15 ml conical tube. To limit adhesion of drop-carrier particles 12 to the walls of conical tubes tube, the tubes can be pretreated with a solution of PBS with 0.1% Pluronic F-127, PBS with 0.5% BSA (Bovine serum albumin), or PBS with 2% FBS (fetal bovine serum). Drop-carrier particles 12 and associated cells were then washed 2-3 times with PBS (with calcium and magnesium ions) supplemented with 0.5% BSA. This wash removes any biotin that might be present in the media and any proteins from the cells that may be present in the background media. Note for all washing steps samples were centrifuged at 300g for 3 min. Drop-carrier particles 12 are then modified with a 0.02 mg/ml solution of streptavidin which binds to available biotin groups on the drop-carrier particles 12. After incubating for 10 min., drop-carrier particles 12 and associated cells were washed 2-3 times with PBS + 0.5% BSA. Next, the drop-carrier particles 12 were modified with biotinylated protein A which is used as an example capture site for the secreted anti-IL-8 proteins. In this example, 10 µL of a 0.5 mg/ml stock solution of biotinylated protein A (Thermo Fisher Scientific) was added to each sample and then incubated for 10 min. Alternatively, biotinylated IgG1, FC Mouse Anti-Human can be used. Finally, the samples were washed 2-3 times with PBS + 0.5% BSA. On the final wash the PBS was replaced with cell culture media.
(3) emulsifying the drop-carrier particles 12 with attached cells and bound affinity reagent in an oil continuous phase to form dropicles 10.
   Drop-carrier particles 12 and associated cells were concentrated by spinning the samples down (300g, 2 min). Supernatant was then removed until approximated 50 µL of sample remained. 100 µL of Novec^{™} oil + 2% w/v Pico-Surf^{™} was then added to the sample. The Eppendorf tube was then flicked 2-5x to help break the sample up into large droplets. Then using either a 100 µL or 200 µL pipette, samples were pipetted up and down at a rate of 2-4 pipettes per second, 50-100X to generate monodisperse dropicles 10. After dropicle 10 formation mineral oil was then added on top of the sample (-100-150 µL) to prevent evaporation of sample and to reduce coalescence while samples incubate.
(4) incubating the dropicles 10 for a time period to accumulate secretions that bind with the affinity reagent.
   Samples were allowed to incubate for 2-24 hours in a cell incubator (37 °C, 5% CO₂). During this step secreted Anti-IL-8 proteins attach to Protein A binding sites on the drop-carrier particles 12 (see FIG. 17A).
(5) breaking the dropicle 10 emulsion to return the drop-carrier particles 12 with attached cells into an aqueous solution.
   To transfer the drop-carrier particles 12 and cells back into water phase, ~4 -6 mL of PBS + 2% FBS was added on top of the sample. The added mineral oil is then removed by pipetting. 50 µL of 20% v/v PFO in Novec^{™} oil was then added to the sample to aid in coalescing the droplet. Coalescing is aided by gently tapping the Eppendorf tube. After 2-5 min any remaining droplets can be coalesced by centrifuging the sample at 100g for 5-10 seconds. Once phase transfer is complete drop-carrier particles 12 and associated cells are transferred to a new 15 ml conical tube (pretreated with 2% FBS in PBS, or 0.5% BSA, or 0.1% Pluronic F-127).
(6) staining the drop-carrier particles 12 with attached cells for captured secretions using a second affinity reagent specific to the secretion.
   Drop-carrier particle 12 samples in aqueous phase 14 are washed 2-3 times with PBS + 2% FBS. On the last wash samples are spun down and supernatant is aspirated until -100 µL remains. 10 µL of 0.5 mg/ml Goat Anti-Human IgG H&L (Cy5) pre-adsorbed (Abcam, ab97172) was added to the sample to stain captured Anti-IL-8 proteins captured on the drop-carrier particles 12 (FIG. 17A). After incubating for 30 min at 37 °C the samples were then washed 2-3X with PBS + 2%FBS to remove any un-conjugated stain. Samples were then put on ice during transfer to the flow cytometer 150.
   Optionally, during this staining process, cells associated with the drop-carrier particles 12 can be stained with Calcein AM. FIG. 17B shows example microscope images taken of drop-carrier particles 12 with an associated cell stained with Calcein AM. Fluorescent imaging clearly shows a strong signal in the Cy5 channel (secretion stain channel) on the drop-carrier particle 12 with the Calcein AM-stained live cell present. Very little background signal is shown on the other drop-carrier particles 12 that do not have associated cells. This indicates successful secretion capture and labeling, as well as limited crosstalk between dropicles 10 during the incubation step.
(7) analyzing (e.g., with a flow cytometer 150) the stained drop-carrier particles 12 with attached cells and optionally sorting cells of interest attached to the drop-carrier particles 12 based on a threshold of intensity based on staining corresponding to secretion amount/affinity.

Samples were analyzed in high-throughput using the On-Chip Sort flow cytometer 150 from On-Chip Biotechnologies Co., Ltd., Tokyo, Japan. Samples were diluted to 200 µL with PBS + 2% FBS and added to the sample inlet. Here, the 150 µm flow chip from On-Chip biotechnologies was used. PBS + 2% FBS was also used as the sheath fluid. Gating on the forward scatter height (FSC (H)) and side scatter height (SSC(H)) was used to select out drop-carrier particles 12 from other background events/noise. Other event may be associated with small amounts of Novec^{™} 7500 oil droplets still present in solution, cells dissociated from drop-carrier particles 12, or cell debris. Example gating plots are shown in FIG. 18. After this first gating, sorting events were then selected from relative far-red fluorescence signal. For example, in FIG. 18 the top 10% of far red signal was selected as a sorting gate. Samples containing drop-carrier particles 12 with attached cells were then sorted and collected. Using the On-Chip Sorter flow cytometer 150, event rates were typically around 50-300 events/s for the samples. Collected samples were stained with Calcein AM and visualized under fluorescence microscopy as shown FIG. 18. After the sort, a large fraction of the cells maintained viability as shown by the calcein AM live stain signal. Further images of the Cy5 channel (captured secretion stain channel) show clear accumulation of drop-carrier particles 12 and associated cells with high levels of captured secretions after the sort. This demonstrates ability to sort cells based off of relative secretion levels using the dropicle 10 system.

### Barcoding Dropicles

Many schemes can be used to barcode drop-carrier particles 12 batch wise with unique identifiers such that multiple targets (e.g., nucleic acids, proteins, cells, or other analytes) can be probed in the same experimental procedure. These include through split and pool synthesis for generation of DNA oligos as described above, or through fluorescence intensity with varying ratios of multiple fluorophores (FIG. 15B), magnetic affinity via varying concentrations of pre-encapsulated magnetic nano-particles 52 (FIG. 15C), unique flow cytometric side scatter signatures from nanoparticles 54 of varying sizes and amounts (FIG. 15D), or changes in particle morphology which allow diameters or other dimensions of the drop-carrier particle 12 to serve as a unique identifier while maintaining uniformly sized cavities or voids (FIG. 15A). Different barcoding approaches can also be combined to further increase the number of different types of drop-carrier particles 12.

Covalent attachment of a small number of differently colored fluorophores provides a tremendous amount of discriminative potential simply through variations in relative concentrations of each molecule. For example, attachment or otherwise embedding of only three different fluorophores at 8 different concentrations yields over 500 distinct barcodes which can be uniquely detected and attributed to a specific drop-carrier particle. Fluorometric barcoding of drop-carrier particles 12 is easily achieved through attachment of fluorophores conjugated to antibodies, reactive groups, or any other moiety which can normally be bound to the surface of the drop-carrier particle 12 or embedded within or covalently linked to the matrix of the drop-carrier particle 12. For example, drop-carrier particles 12 fabricated using either PEG-Norb or PEG-VS can be labeled during or after fabrication by conjugating maleimide modified fluorescent dyes (e.g., Alexa Fluor^{™} 488 Maleimide, Alexa Fluor^{™} 568 Maleimide, etc.) to the thiolated crosslinkers. Different ratios of these fluorophores can be mixed in order to create unique barcodes. In another embodiment, biotin-PEG-thiol (Nanocs) can be conjugated to PEG-Norb, PEG-VS, or any other thiol reactive PEG based polymers before or after drop-carrier particle 12 crosslinking. Biotin groups can then be modified with fluorescent streptavidin molecules (e.g., Alexa Fluor ^{™} 488, 568, 647 streptavidin among others) with various colors, concentrations, and ratios. Modifying with fluorescent streptavidin after particle fabrication allows for efficient barcoding processes. For example, pre-mixtures of different labeled streptavidin molecules can be premixed at different concentrations/ratios and fabricated drop-carrier particles 12 can be subsequently added to create many different barcodes efficiently. In another example, fluorescent nanoparticles of varying concentrations and ratios can be mixed with the hydrogel precursor and embedded within the hydrogel matrix of drop-carrier particles 12 during manufacture in one embodiment. Fluorescent readout of barcoded drop-carrier particles 12 in an aqueous phase or within dropicles 10 can be performed using standard microscopy, flow cytometry 150, plate readers, or many other standard pieces of laboratory equipment.

Magnetism can be used to barcode drop-carrier particles 12 and the resultant dropicles 10 through variations in magnetic attractive force within an applied magnetic field. Drop-carrier particles 12 can be manufactured with different levels of magnetic content, yielding different magnetic barcodes. Different level of magnetic content can be achieved by introducing water soluble magnetic nanoparticle or microparticles 52 within drop-carrier particle precursor solutions prior to polymerization. One embodiment in which magnetic barcoding is used involves placing dropicles 10 or drop-carrier particles 12 on a surface over an array of magnetic pillars in the presence of an oscillating magnetic field. This oscillation results in a net unidirectional movement across the plane of pillars which are spaced further and further apart along the plane of movement. The total distance covered by dropicles 10 or drop-carrier particles 12 in an aqueous phase is then proportional to the degree of magnetic functionalization as drop-carrier particles 12 with less magnetic content will eventually stop, unable to traverse the distance to the next pillar sequence, whereas those with a larger degree of magnetization will continue moving due to the stronger attractive force such as that disclosed in U.S. Patent No. 10,144,911, which is incorporated herein by reference. Magnetic functionalization of drop-carrier particles 12 also enables rapid movement of emulsions throughout the continuous phase. Magnetic particles 42 encapsulated within emulsified microparticles provide enough force in the presence of an applied magnetic field to separate drop-carrier particle 12 containing droplets from a large background of satellite droplets 28 (see FIG. 5). Therefore, application of this barcoding scheme can not only separate subpopulations spatially through variations in applied force, but can also separate drop-carrier particles 12 from unwanted satellite droplets 28 to improve signal in many assays.

Granularity is a commonly used metric in flow cytometry to separate distinct subsets of cells from one another. Drop-carrier particles 12 can be barcoded through the addition of light scattering nanoparticles 54 of varying size and/or concentration that scatter light to different angles and/or with different intensities. Nanoparticles 54 (e.g., polystyrene nanoparticles) can be loaded into the precursor hydrogel solution in one embodiment prior to polymerization to create drop-carrier particles 12 with embedded scatter barcodes. This alternative approach allows for analysis of the drop-carrier particle 12 type in flow cytometers 150, e.g., by analyzing the side-scatter signal without the need for extra fluorescence signals which require compensation and could interfere with analysis of analytes that are fluorescently labeled and attached to the drop-carrier particle 12.

Another method of barcoding drop-carrier particles includes through the size of the drop-carrier particle 12 itself. This is illustrated in FIG. 15A. Different sizes of drop-carrier particles 12 will lead to different forward scatter signals in a flow cytometer 150. Differences in particle diameter also allows for visual differentiation between particle classes and can be easily classified through wide field imaging and microscopy. Additionally, microfluidic techniques such as inertial focusing or deterministic lateral displacement can be used to sort drop-carrier particles 12 of different sizes from one another through variations in cumulative force applied on each drop-carrier particle 12 within the flow field. As discussed with other non-fluorescent barcodes, such size-based barcoding enables fluorescent signals across multiple wavelengths to be used for analyte detection without interference from the barcode. In addition, for imaging flow cytometers 150, the shape/size of the drop-carrier particle 12 and void or cavity region 18 can be imaged providing a method of barcoding as well.

### Methods of reading and sorting dropicles/drop-carrier particles

In order to translate signals produced in dropicle assays into quantifiable measures, well-defined methods of reading assay outputs must be compatible with the dropicle system. Furthermore, developing methods to process signals and sort subsets of dropicles 10 into different populations is critical for the isolation of high performers from single cell studies. Notably, the drop-carrier particles 12 and the formed dropicles 10 are compatible with many commonly used laboratory systems, making both reading and sorting relatively straightforward with appropriate equipment.

In certain embodiments, signals corresponding to reactions conducted in the volume encapsulated within a dropicle 10 become attached to the surface of the drop-carrier particle 12, or accumulate in the aqueous phase 14 within and surrounding the drop-carrier particle 12. This enables detection of fluorometric or colorimetric signal variations through signal detectors (e.g., photomultiplier tubes (PMTs)) in both custom built microfluidic devices, which can be compatible with dropicles 10 in an oil continuous phase, and commercial flow cytometers 150 and FACS systems which are compatible with drop-carrier particles 12 once brought back into an aqueous phase. Some commercial flow cytometers 150 are also compatible with oil continuous phases such as the On-Chip Flow and On-Chip Sort from On-Chip Biotechnologies Co., Ltd., Tokyo, Japan. The diameter of the drop-carrier particle 12 should be tuned to be < ~50 micrometers for use in standard commercial flow cytometry instruments 150, however, larger sizes up to ~500 micrometers can be used in other commercial cytometry systems (e.g., from On-Chip Biotechnologies or Biosorter from Union Biometrica). Barcoding signatures can also be read simultaneously using fluorescence and/or scatter signals as discussed herein. The number of positive signal drop-carrier particles 12 for each barcode can then be counted from the flow cytometry scatter plots when a threshold or gate(s) are used to identify specific sub-populations, leading to a multiplexed assay by counting fractions of drop-carrier particles 12 within particular barcode gates and with high vs. low assay signal. Sorting based on these assay signals can also be performed to isolate high vs. low drop-carrier particles 12 for further cellular analysis and growth, or nucleic acid analysis and downstream sequencing. In other embodiments dropicles 10 containing captured analytes (e.g., using antibodies) can be further exposed with magnetic particles/micro bubble particles that also bind to captured analytes to form a sandwich. Positive signal particles can then be separated via magnetic field or buoyancy respectively.

Standard fluorescent microscopy is also an effective method of probing assay outcomes. Here wide-field imaging protocols can be applied to measure all dropicles 10 in a sample batch and develop a better understanding of variability within discrete assay measurements. In some embodiments a portable imaging system may be used to allow for on-site/point of care analysis (e.g., wide-field fluorescent imaging on a mobile device) like that disclosed in U.S. Patent Application Publication No. 2013-0157351 or U.S. Patent No. 9,007,433 which are incorporated by reference herein. Additionally, the non-uniformity in drop-carrier particle 12 geometry implies that magnetic fields can be utilized to align populations of magnetic dropicles 10 in the same orientation to obtain uniform signals from the particle void or cavity 18 during imaging or during analysis in flow.

The asymmetry of the crescent shaped drop-carrier particles 12 can be exploited to align drop-carrier particles 12 based off buoyancy forces. For example, it was found that crescent-shaped drop-carrier particles 12 that are denser than the water phase would tend to settle and orient with their cavities 18 exposed upright. This typically occurred on a time scale of 5 - 10 min. This preferred alignment can be used to make it easier to load microscale objects into exposed cavities 18 (e.g., loading cells). The shape of the drop-carrier particles 12 can also be exploited to create a preferred orientation during flow in a confined channel. For example, the drop-carrier particle 12 shape can be tuned such that particles orient in a preferred direction such that scatter signatures are more uniform.

The disclosure further provides systems and methods in accordance with the following Statements.

Statement 1. A droplet-based system that employs volumes associated with solid-phase particles suspended in an immiscible fluid comprising: a plurality of three-dimensional hydrophilic drop-carrier particles formed from a crosslinked hydrogel, each hydrophilic drop-carrier particle having a void or cavity formed therein; an aqueous fluid associated with the three-dimensional hydrophilic drop-carrier particles and disposed in the void or cavity of the plurality of three-dimensional hydrophilic drop-carrier particles; and wherein the plurality of three-dimensional hydrophilic drop-carrier particles associated with the aqueous fluid are disposed or suspended in an oil phase.

Statement 2. The system of Statement 1, wherein the aqueous fluid disposed in the voids or cavities of the three-dimensional hydrophilic drop-carrier particles have substantially the same volumes.

Statement 3. The system of Statement 1, wherein the void or cavity opens to a surface of the three-dimensional hydrophilic drop-carrier particle.

Statement 4. The system of Statement 3, wherein the void or cavity opens to the surface of the three-dimensional hydrophilic drop-carrier particle at an opening that has an area that is less than 33% of a total surface area of an envelope of the three-dimensional hydrophilic drop-carrier particle.

Statement 5. The system of Statement 3, wherein the void or cavity opens to the surface of the three-dimensional hydrophilic drop-carrier particle at an opening that has an area that is less than 10% of a total surface area of an envelope of the three-dimensional hydrophilic drop-carrier particle.

Statement 6. The system of Statement 3, wherein the void or cavity opens to the surface of the three-dimensional hydrophilic drop-carrier particle at an opening that has an area that is less than 5% of a total surface area of an envelope of the three-dimensional hydrophilic drop-carrier particle.

Statement 7. The system of Statement 1, wherein the void or cavity is located completely internal to the three-dimensional hydrophilic drop-carrier particle and does not intersect with a surface of the three-dimensional hydrophilic drop-carrier particle.

Statement 8. The system of Statement 1, wherein the plurality of three-dimensional hydrophilic drop-carrier particles are formed from a PEG-based crosslinked hydrogel.

Statement 9. The system of Statement 1, wherein the plurality of three-dimensional hydrophilic drop-carrier particles comprises a unique indicia formed thereon or therein.

Statement 10. The system of Statement 1, wherein the void or cavity of at least some of the plurality of three-dimensional hydrophilic drop-carrier particles contains a cell or bead therein.

Statement 11. The system of Statement 1, wherein the void or cavity of the plurality of three-dimensional hydrophilic drop-carrier particles has a volume within the range of about 100 fL to about 10 nL.

Statement 12. The system of Statement 1, wherein the void or cavity of the plurality of three-dimensional hydrophilic drop-carrier particles has a length dimension within the range of about 5 µm and about 250 µm.

Statement 13. The system of Statement 1, wherein the plurality of three-dimensional hydrophilic drop-carrier particles further comprises a barcoding material contained therein or thereon.

Statement 14. The system of Statement 1, wherein the plurality of three-dimensional hydrophilic drop-carrier particles further comprises magnetic particles contained therein.

Statement 15. The system of Statement 1, wherein the plurality of three-dimensional hydrophilic drop-carrier particles further comprises light-scattering particles contained therein.

Statement 16. The system of Statement 1, wherein the plurality of three-dimensional hydrophilic drop-carrier particles comprise one or more dyes of varying intensity.

Statement 17. The system of Statement 1, wherein the plurality of three-dimensional hydrophilic drop-carrier particles comprise different sizes of particles.

Statement 18. A droplet-based system that employs volumes associated with solid-phase particles suspended in an immiscible fluid: a plurality of three-dimensional hydrophilic drop-carrier particles formed from a crosslinked hydrogel, each hydrophilic drop-carrier particle having a void or cavity formed therein; an aqueous fluid associated with the three-dimensional hydrophilic drop-carrier particles and disposed in the void or cavity of the plurality of three-dimensional hydrophilic drop-carrier particles; and wherein the plurality of three-dimensional hydrophilic drop-carrier particles associated with the aqueous fluid are disposed or suspended in an oil phase to form an emulsion of dropicles and wherein substantially all of the dropicles comprise a single hydrophilic drop-carrier particle contained therein.

Statement 19. The system of Statement 18, wherein the aqueous fluid disposed in the void or cavity of the three-dimensional hydrophilic drop-carrier particles have substantially the same volumes.

Statement 20. The system of Statement 18, wherein the void or cavity opens to a surface of the three-dimensional hydrophilic drop-carrier particle.

Statement 21. The system of Statement 20, wherein the void or cavity opens to the surface of the three-dimensional hydrophilic drop-carrier particle at an opening that has an area that is less than 33% of a total surface area of an envelope of the three-dimensional hydrophilic drop-carrier particle.

Statement 22. The system of Statement 20, wherein the void or cavity opens to the surface of the three-dimensional hydrophilic drop-carrier particle at an opening that has an area that is less than 10% of a total surface area of an envelope of the three-dimensional hydrophilic drop-carrier particle.

Statement 23. The system of Statement 20, wherein the void or cavity opens to the surface of the three-dimensional hydrophilic drop-carrier particle at an opening that has an area that is less than 5% of a total surface area of an envelope of the three-dimensional hydrophilic drop-carrier particle.

Statement 24. The system of Statement 18, wherein the void or cavity is located completely internal to the three-dimensional hydrophilic drop-carrier particle and does not intersect with a surface of the three-dimensional hydrophilic drop-carrier particle.

Statement 25. The system of Statement 18, wherein the plurality of three-dimensional hydrophilic drop-carrier particles are formed from a PEG-based crosslinked hydrogel.

Statement 26. A method of manufacturing hydrophilic drop-carrier particles comprising: providing a microfluidic droplet generator device having a plurality of inlets; flowing a solution of a crosslinkable first component of an aqueous two-phase system containing a photoinitiator in one of the inlets, wherein the crosslinkable first component is polyethylene glycol) PEG or a PEG-derivative; flowing a solution of a second component of the aqueous two-phase system containing a crosslinker in another of the inlets; flowing an oil phase in another of the inlets, whereby aqueous droplets are formed in the microfluidic device, each aqueous droplet separating into separate regions within the respective droplet, the separate regions containing an enriched phase of the PEG component and an enriched phase of the second component of the aqueous two-phase system; and crosslinking the enriched phase of the PEG component by exposure to light to form hydrophilic drop-carrier particles.

Statement 27. The method of Statement 26, wherein crosslinking is initiated by exposure to ultraviolet (UV) light.

Statement 28. The method of Statement 26, further comprising removing the oil and enriched phase of the second component from the drop-carrier particles.

Statement 29. The method of Statement 28, further comprising loading a separate aqueous solution with the hydrophilic drop-carrier particles, wherein the hydrophilic drop-carrier particles are associated with a droplet of the separate aqueous solution.

Statement 30. The method of Statement 29, wherein the separate aqueous solution is further disposed in a void or cavity formed within the hydrophilic drop-carrier particles.

Statement 31. The method of Statement 26, wherein the enriched phase of the second component comprises dextran.

Statement 32. A method of manufacturing hydrophilic drop-carrier particles comprising: providing a microfluidic droplet generator device having a plurality of inlets; flowing a solution of a crosslinkable first component of an aqueous two-phase system containing a crosslinker in one of the inlets, wherein the crosslinkable first component is polyethylene glycol) PEG or a PEG-derivative; flowing a solution of a second component of the aqueous two-phase system in another of the inlets; flowing an oil phase in another of the inlets, whereby droplets are formed in the microfluidic device, each droplet separating into separate regions within the respective droplet containing an enriched phase of the PEG component and an enriched phase of the second component of the aqueous two-phase system; and crosslinking the enriched phase of the PEG component by increasing the pH to form hydrophilic drop-carrier particles.

Statement 33. A method of performing a cell secretion assay using drop-carrier particles comprising: a. providing a plurality of three-dimensional hydrophilic drop-carrier particles, each particle having a void or cavity formed therein; b. loading cells into the voids or cavities of the plurality of three-dimensional hydrophilic drop-carrier particles; c.
adding an affinity agent to the plurality of three-dimensional hydrophilic drop-carrier particles specific to a cell secretion of interest; d. emulsifying the plurality of three-dimensional hydrophilic drop-carrier particles containing the cells and affinity agent to form a plurality of dropicles; e. incubating the plurality of dropicles; f. breaking the emulsion of the dropicles to obtain a plurality of three-dimensional hydrophilic drop-carrier particles in an aqueous solution; g. adding a stain, dye, or other secondary affinity reagent specific to the secretion of interest on one or more of the plurality of three-dimensional hydrophilic drop-carrier particles; h. analyzing the plurality of three-dimensional hydrophilic drop-carrier particles of operation (g) for a signal formed or generated by the stain, dye, or other secondary affinity reagent specific to the cell secretion of interest on one or more of the plurality of three-dimensional hydrophilic drop-carrier particles.

Statement 34. The method of Statement 33, further comprising, prior to adding the affinity agent, washing the plurality of three-dimensional hydrophilic drop-carrier particles containing the loaded cells.

Statement 35. The method of Statement 33, wherein analyzing the plurality of three-dimensional hydrophilic drop-carrier particles of operation (g) comprises flowing the plurality of three-dimensional hydrophilic drop-carrier particles through a flow cytometer.

Statement 36. The method of Statement 33, wherein analyzing the plurality of three-dimensional hydrophilic drop-carrier particles of operation (g) comprises observing or reading the plurality of three-dimensional hydrophilic drop-carrier particles in a well plate or other holder.

Statement 37. The method of Statement 35, further comprising sorting the plurality of three-dimensional hydrophilic drop-carrier particles based on a threshold fluorescence intensity or color measured with the flow cytometer.

Statement 38. The method of Statement 33, wherein the affinity agent is disposed exclusively in the void or cavity of the plurality of three-dimensional hydrophilic drop-carrier particles.

Statement 39. The method of Statement 33, wherein the affinity agent is disposed over substantially all of the surfaces of the plurality of three-dimensional hydrophilic drop-carrier particles.

Statement 40. The method of Statement 33, wherein the operations are performed consecutively.

While embodiments of the present invention have been shown and described, various modifications may be made without departing from the scope of the present invention. The invention, therefore, should not be limited except to the following claims and their equivalents.

## Claims

1. A plurality of three-dimensional hydrophilic drop-carrier particles formed from a crosslinked hydrogel, each three-dimensional hydrophilic drop-carrier particle having a void or cavity formed therein that opens to an outer surface of the drop-carrier particle, wherein the drop-carrier particles have internal surfaces localized within respective voids or cavities that are functionalized with binding or reactive moieties.

2. The plurality of three-dimensional hydrophilic drop-carrier particles of claim 1, wherein the binding or reactive moieties comprise nucleic acids, peptides, cell adhesion peptides, catalysts, enzymes, antibodies, primers, antigens, aptamers, biotin, or biotin/streptavidin complexes.

3. The plurality of three-dimensional hydrophilic drop-carrier particles of claim 2, wherein the binding or reactive moieties comprise cell adhesive peptides, biotin, or biotin/streptavidin complexes and wherein cells are adhered to the internal surfaces localized within respective voids or cavities via the cell adhesive peptides, biotin, or biotin/streptavidin complexes.

4. The plurality of three-dimensional hydrophilic drop-carrier particles of claim 3, wherein the binding or reactive moieties further comprise a cell secretion capture reagent specific to a secretion secreted by the cells.

5. The plurality of three-dimensional hydrophilic drop-carrier particles of claim 1, wherein an aqueous fluid is disposed in the voids or cavities of the three-dimensional hydrophilic drop-carrier particles.

6. The plurality of three-dimensional hydrophilic drop-carrier particles of claim 1, wherein the void or cavity opens to the outer surface of the three-dimensional hydrophilic drop-carrier particle at an opening that has an area that is less than 33% of a total surface area of an envelope of the three-dimensional hydrophilic drop-carrier particle.

7. The plurality of three-dimensional hydrophilic drop-carrier particles of claim 1, wherein the void or cavity opens to the outer surface of the three-dimensional hydrophilic drop-carrier particle at an opening that has an area that is less than 10% of a total surface area of an envelope of the three-dimensional hydrophilic drop-carrier particle.

8. The plurality of three-dimensional hydrophilic drop-carrier particles of claim 1, wherein the plurality of three-dimensional hydrophilic drop-carrier particles are formed from a PEG-based crosslinked hydrogel.

9. The plurality of three-dimensional hydrophilic drop-carrier particles of claim 1, wherein the plurality of three-dimensional hydrophilic drop-carrier particles comprises a unique indicia formed thereon or therein.

10. The plurality of three-dimensional hydrophilic drop-carrier particles of claim 1, wherein the void or cavity of the plurality of three-dimensional hydrophilic drop-carrier particles has a volume within the range of about 100 fL to about 10 nL.

11. The plurality of three-dimensional hydrophilic drop-carrier particles of claim 1, wherein the void or cavity of the plurality of three-dimensional hydrophilic drop-carrier particles has a length dimension within the range of about 5 µm and about 250 µm.

12. The plurality of three-dimensional hydrophilic drop-carrier particles of claim 1, wherein the plurality of three-dimensional hydrophilic drop-carrier particles further comprises a barcoding material contained therein or thereon.

13. The plurality of three-dimensional hydrophilic drop-carrier particles of claim 1, wherein the plurality of three-dimensional hydrophilic drop-carrier particles further comprises magnetic particles contained therein.

14. The plurality of three-dimensional hydrophilic drop-carrier particles of claim 1, wherein the plurality of three-dimensional hydrophilic drop-carrier particles have a shape defined by a spherical envelope.

15. The plurality of three-dimensional hydrophilic drop-carrier particles of claim 14, wherein the void or cavity is a spherical shape that interfaces, communicates with, or opens to the outer surface of the particle, creating a final particle with a crescent-shaped cross-section.
